# EUROPEAN PATENT APPLICATION

(11) **EP 4 756 601 A1**
(43) Date of publication of application: **10.06.2026**
(21) Application number: 25218536.8
(22) Date of filing: 26.11.2025
(51) Int. Cl.: G06F 3/06

(54) **STORAGE SYSTEM, STORAGE SERVER, AND OPERATING METHOD OF THE STORAGE SERVER**

(30) Priority: 06.12.2024 KR 20240180228
(71) Applicant: Samsung Electronics Co., Ltd., Suwon-si, Gyeonggi-do 16677 (KR)
(72) Inventor: LEE, Jinwook, 16677 Suwon-si, Gyeonggi-do (KR); SHIN, Seohyun, 16677 Suwon-si, Gyeonggi-do (KR)
(74) Representative: Kuhnen & Wacker Patent- und Rechtsanwaltsbüro PartG mbB

(57) **Abstract**

Provided is a storage server (1002) including: a storage device (1200_1, 1200_2) including a storage controller (1210), nonvolatile memory, and a memory (1220), the storage controller (1210) being configured to provide a virtual function; a memory device (1300_1, 1300_2) comprising a host memory buffer (HMB1, HMB2) managed by the storage device (1200_1, 1200_2) a host memory buffer (HMB1, HMB2) managed by the storage device (1200_1, 1200_2); a shared memory device (1500); a CXL memory device (1400_1, 1400_2); and the storage management system (1100) configured to: receive service level agreement, SLA, information from virtual machines; receive attribute information from the storage device (1200_1, 1200_2); analyze the SLA information and the attribute information and generate an analysis result; allocate, based on the analysis result, an internal memory resource or an external memory resource to the virtual function; and monitor for an SLA violation of the virtual function, wherein the internal memory resource includes the storage device memory (1220), and the external memory resource includes the CXL memory device (1400_1, 1400_2), the shared memory device (1500), and the host memory buffer (HMB1, HMB2) of the memory device (1300_1, 1300_2).

## Description

### BACKGROUND

The disclosure relates to a computer system, and more particularly, to a storage system, a storage server, and an operating method of the storage server.

Semiconductor memories are classified into volatile memory devices, such as static random-access memory (SRAM), dynamic random-access memory (DRAM), etc., that lose stored data when the supply of power thereto is blocked, and nonvolatile memory devices, such as phase-change random-access memory (PRAM), magnetic random-access memory (MRAM), resistive random-access memory (RRAM), ferroelectric random-access memory (FRAM), etc., that retain stored data even when the supply of power thereto is blocked.

A storage device is a device that stores data according to control by a host device, such as a computer, a smartphone, a smart pad, etc. Storage devices include a device storing data in a magnetic disk, such as a hard disk drive (HDD), and a device storing data in a semiconductor memory, in particular, a nonvolatile memory, such as a solid state drive (SSD), a memory card, etc.

The storage device may be shared by one or more virtual machines and may be accessed by a plurality of users through each virtual machine.

### SUMMARY

Provided is a storage system, a storage server, and an operating method of the storage server for providing stable performance or improved performance.

According to an aspect of the disclosure, a storage server includes: a storage device including a storage controller, a nonvolatile memory device, and a storage device memory storing one or more storage device instructions, wherein the storage controller is configured to execute the one or more storage device instructions and cause the storage device to provide a virtual function; a memory device including a host memory buffer managed by the storage device; a shared memory device configured to communicate with the storage device and a storage management system; a compute express link (CXL) memory device configured to communicate with the storage device and the storage management system based on a CXL.mem protocol; and the storage management system including system memory storing one or more system instructions and at least one system processor configured to execute the one or more system instructions, wherein the one or more system instructions, when executed by the at least one system processor, cause the storage management system to: receive service level agreement (SLA) information from each of a plurality of virtual machines; receive attribute information from the storage device; analyze the SLA information and the attribute information and generate an analysis result; allocate, based on the analysis result, an internal memory resource or an external memory resource to the virtual function; and monitor for an SLA violation of the virtual function, wherein the internal memory resource includes at least a portion of the storage device memory, and the external memory resource includes at least a portion of one or more of the CXL memory device, the shared memory device, and the host memory buffer of the memory device.

According to an aspect of the disclosure, a method of operating a storage server including a storage management system, a storage device, a memory device, a shared memory device, and a compute express link (CXL) memory device, includes: receiving, by the storage management system, service level agreement (SLA) information from each of a plurality of virtual machines; transmitting, by the storage device, attribute information of the storage device to the storage management system; allocating, by the storage management system, based on the SLA information and the attribute information, an internal memory resource or an external memory resource to one or more of a plurality of virtual functions; and monitoring, by the storage management system, for an SLA violation of each of the plurality of virtual functions, wherein the storage device includes a storage controller, a memory storing one or more storage device instructions, and a nonvolatile memory device, wherein the storage controller is configured to execute the one or more storage device instructions and cause the storage device to provide the plurality of virtual functions, and wherein the internal memory resource includes at least a portion of the storage device memory, and the external memory resource includes at least a portion of one or more of a host memory buffer of the memory device, the shared memory device, and the CXL memory device.

According to an aspect of the disclosure, a storage system includes: a storage server including: a storage management system including system memory storing one or more system instructions, and at least one system processor configured to execute the one or more system instructions; a storage device including a storage device memory storing one or more storage device instructions, a storage controller configured to execute the one or more storage device instructions, and a nonvolatile memory device, a memory device; a shared memory device; and a compute express link (CXL) memory device; and a client server including: client server memory storing one or more client server instructions; and at least one client server processor configured to execute the one or more client server instructions; wherein the one or more storage device instructions, when executed by the storage controller, cause the storage device to provide a virtual function, wherein the one or more client server instructions, when executed by the at least one client server processor, cause the client server to: operate a plurality of virtual machines; and transmit, to the storage server, service level agreement (SLA) information with respect to each of the plurality of virtual machines, and wherein the one or more system instructions, when executed by the at least one system processor, cause the storage management system to: receive the SLA information from the client server; receive attribute information from the storage device; allocate, based on the SLA information and the attribute information, an internal memory resource or an external memory resource to the virtual function; and monitor for an SLA violation of the virtual function, wherein the internal memory resource includes at least a portion of the storage device memory, and the external memory resource includes at least a portion of one or more of a host memory buffer of the memory device, the shared memory device, and the CXL memory device.

### BRIEF DESCRIPTION OF DRAWINGS

The above and other aspects and features of certain embodiments of the present disclosure will be more clearly understood from the following detailed description taken in conjunction with the accompanying drawings, in which:
FIG. 1 is a block diagram of a server system according to one or more embodiments;
FIG. 2 is a block diagram of a software hierarchy of the server system of FIG. 1;
FIG. 3 is a more detailed block diagram of a storage device of FIG. 1;
FIG. 4 is a more detailed block diagram of a service level agreement (SLA) manager of FIG. 1;
FIG. 5 is a flowchart of an example of an operating method of a storage server of FIG. 1;
FIG. 6 is a more detailed flowchart of operation S150 of FIG. 5;
FIG. 7 is a more detailed flowchart of operation S150 of FIG. 5;
FIG. 8 is a more detailed flowchart of operation S155 of FIG. 6;
FIG. 9 is a more detailed flowchart of operation S170 of FIG. 5;
FIG. 10 is a flowchart of an example of an operating method of the storage server of FIG. 1;
FIG. 11 is a diagram for describing an operation of the storage server of FIG. 1;
FIG. 12 is a diagram for describing an operation of the storage server of FIG. 1;
FIGS. 13A and 13B are diagrams for describing an operation of the storage server of FIG. 1;
FIGS. 14A and 14B are diagrams for describing an operation of the storage server of FIG. 1;
FIGS. 15A and 15B are diagrams for describing an operation of the storage server of FIG. 1;
FIG. 16 is a flowchart of an example of an operating method of the storage server of FIG. 1;
FIG. 17A shows a neural network (NN) which may be used as an example of a machine learning model;
FIG. 17B is a diagram showing an example of a method of generating a resource allocation map through a NN;
FIG. 18 is a block diagram of a server system according to one or more embodiments;
FIG. 19 is a diagram of a system according to one or more embodiments; and
FIG. 20 is a diagram of a data center in which a memory device is used, according to one or more embodiments.

### DETAILED DESCRIPTION

Hereinafter, embodiments are clearly described in detail for one of ordinary skill in the art to implement the present disclosure.

In the following description, like reference numerals refer to like elements throughout the specification. Terms such as "unit", "module", "member", and "block" may be embodied as hardware or software. As used herein, a plurality of "units", "modules", "members", and "blocks" may be implemented as a single component, or a single "unit", "module", "member", and "block" may include a plurality of components.

It will be understood that when an element is referred to as being "connected" with or to another element, it can be directly or indirectly connected to the other element, wherein the indirect connection includes "connection via a wireless communication network".

Also, when a part "includes" or "comprises" an element, unless there is a particular description contrary thereto, the part may further include other elements, not excluding the other elements.

Throughout the description, when a member is "on" another member, this includes not only when the member is in contact with the other member, but also when there is another member between the two members.

As used herein, the expressions "at least one of a, b or c" and "at least one of a, b and c" indicate "only a," "only b," "only c," "both a and b," "both a and c," "both b and c," and "all of a, b, and c."

It will be understood that, although the terms "first", "second", "third", etc., may be used herein to describe various elements, is the disclosure should not be limited by these terms. These terms are only used to distinguish one element from another element.

As used herein, the singular forms "a," "an" and "the" are intended to include the plural forms as well, unless the context clearly indicates otherwise.

With regard to any method or process described herein, an identification code may be used for the convenience of the description but is not intended to illustrate the order of each step or operation. Each step or operation may be implemented in an order different from the illustrated order unless the context clearly indicates otherwise. One or more steps or operations may be omitted unless the context of the disclosure clearly indicates otherwise.

The various actions, acts, blocks, steps, or the like in the flow diagrams may be performed in the order presented, in a different order, or simultaneously. Further, in one or more embodiments, some of the actions, acts, blocks, steps, or the like may be omitted, added, modified, skipped, or the like without departing from the scope of the disclosure.

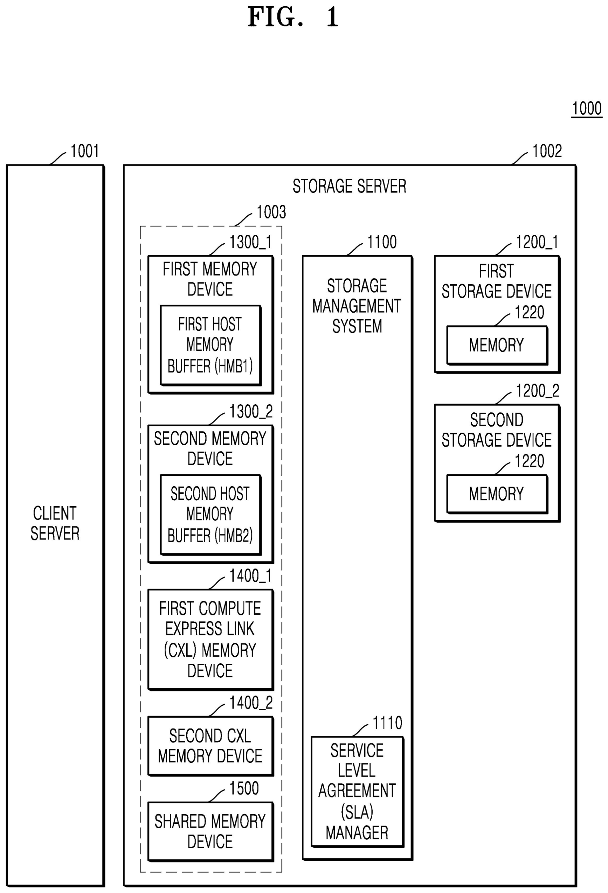

FIG. 1 is a block diagram of a server system 1000 according to one or more embodiments.

Referring to FIG. 1, the server system 1000 (a computer system or a storage system) may include a client server 1001 and a storage server 1002. The server system 1000 may include a large capacity storage system. The server system 1000 may include a data center or a data storage center for maintaining various data and providing various services with respect to various data. The server system 1000 may include a system for operating a search engine or a database and may include a computing system used in various institutes. The server system 1000 may include a storage system for providing a cloud service or an on-premises service.

The client server 1001 may indicate a user, a user's terminal, or a user's computing system using various services with respect to various data. The client server 1001 may store data in the storage server 1002 or read data stored in the storage server 1002.

The storage server 1002 may store data or transmit the stored data to the client server 1001, in response to a request by the client server 1001. According to one or more embodiments, the client server 1001 and the storage server 1002 may communicate with each other through a network.

The storage server 1002 may include a storage management system 1100, storage devices, for example first and second storage devices 1200_1 and 1200_2, and a memory device group 1003. The storage management system 1100 may include hardware, software, or a combination thereof, configured to manage a resource allocation operation and a resource reallocation operation, according to one or more embodiments. However, the scope of the disclosure is not limited thereto. According to one or more embodiments, the number of storage devices (e.g., the first and second storage devices 1200_1 and 1200_2) may increase or decrease. The memory device group 1003 may include memory devices, for example, first and second memory devices 1300_1 and 1300_2, compute express link (CXL) memory devices, for example, first and second CXL memory devices 1400_1 and 1400_2, and a shared memory device 1500. However, the scope of the disclosure is not limited thereto. According to one or more embodiments, the types of memory devices, the number of memory devices, the number of shared memory devices, and the number of CXL memory devices may vary. The memory devices, the shared memory devices, and the CXL memory devices are included in the memory device group 1003.

According to one or more embodiments, the memory device group 1003 may function as a memory temporarily storing data to be transmitted to the first and second storage devices 1200_1 and 1200_2 or data transmitted from the first and second storage devices 1200_1 and 1200_2. According to one or more embodiments, the memory device group 1003 may store metadata of the first and second storage devices 1200_1 and 1200_2. For example, the metadata may include a mapping table, HEALTH/SMART information, TELEMETRY information, restoration information, power-related information, etc.

The first and second memory devices 1300_1 and 1300_2 may be used as main memory devices of the storage server 1002 and may include volatile memories, such as static random-access memory (SRAM) and/or dynamic random-access memory (DRAM). However, the scope of the disclosure is not limited thereto, and the first and second memory devices 1300_1 and 1300_2 may include nonvolatile memories, such as flash memory, ferroelectric random-access memory (FRAM), phase-change random-access memory (PRAM), and/or resistive random-access memory (RRAM).

According to one or more embodiments, the first and second memory devices 1300_1 and 1300_2 may communicate through a memory interface, such as a double data rate (DDR) or low power double data rate (LPDDR) interface or a CXL interface. According to one or more embodiments, the first and second memory devices 1300_1 and 1300_2 may include a host memory buffer. For example, the first memory device 1300_1 may include a first host memory buffer HMB1, and the second memory device 1300_2 may include a second host memory buffer HMB2.

The storage management system 1100 may allocate portions of the first and second memory devices 1300_1 and 1300_2 as buffers of the first and second storage devices 1200_1 and 1200_2, respectively. Hereinafter, the portion of the first or second memory device 1300_1 or 1300_2, which is allocated as the buffer of the first or second storage device 1200_1 or 1200_2, is referred to as a host memory buffer. For example, a portion of the first memory device 1300_1 may be referred to as a first host memory buffer HMB1, and a portion of the second memory device 1300_2 may be referred to as a second host memory buffer HMB2.

According to one or more embodiments, the first and second host memory buffers HMB1 and HMB2 may be allocated for the first and second storage devices 1200_1 and 1200_2 to use the first and second memory devices 1300_1 and 1300_2 as the buffers. The first and second host memory buffers HMB1 and HMB2 may be managed by the first and second storage devices 1200_1 and 1200_2. The first and second host memory buffers HMB1 and HMB2 may store data of the first and second storage devices 1200_1 and 1200_2. For example, metadata for storage management including a mapping table, etc. of the first and second storage devices 1200_1 and 1200_2 may be stored in the first and second host memory buffers HMB1 and HMB2.

According to one or more embodiments, the first and second CXL memory devices 1400_1 and 1400_2 may include a CXL memory controller and a memory. According to one or more embodiments, the CXL memory controller may store data in a memory or transmit data stored in the memory to the storage management system 1100 according to control by the storage management system 1100. According to one or more embodiments, the CXL memory controller may store data in the memory or transmit data stored in the memory to the first and second storage devices 1200_1 and 1200_2 according to control by the first and second storage devices 1200_1 and 1200_2. According to one or more embodiments, the CXL memory devices may include DRAM. However, the scope of the disclosure is not limited thereto.

According to one or more embodiments, the storage management system 1100, the first and second storage devices 1200_1 and 1200_2, and the first and second CXL memory devices 1400_1 and 1400_2 may be configured to share the same interfaces with one another. For example, the storage management system 1100, the first and second storage devices 1200_1 and 1200_2, and the first and second CXL memory devices 1400_1 and 1400_2 may communicate with one another through a CXL interface. The storage management system 1100, the first and second storage devices 1200_1 and 1200_2, and the first and second CXL memory devices 1400_1 and 1400_2 may communicate with one another based on a CXL protocol.

According to one or more embodiments, the first and second storage devices 1200_1 and 1200_2 and the first and second CXL memory devices 1400_1 and 1400_2 may communicate with each other by using CXL.mem, which is a memory access protocol. CXL.mem may indicate memory access protocols supporting access to a memory. The first and second storage devices 1200_1 and 1200_2 may access the first and second CXL memory devices 1400_1 and 1400_2 by using the CXL.mem.

According to one or more embodiments, the storage management system 1100 and the first and second CXL memory devices 1400_1 and 1400_2 may communicate with each other by using CXL.mem, which is a memory access protocol. The storage management system 1100 may access the first and second CXL memory devices 1400_1 and 1400_2 by using the CXL.mem.

The shared memory device 1500 may include volatile memories such as SRAM and/or DRAM, but may also include nonvolatile memories, such as flash memory, FRAM, PRAM, and/or RRAM. The shared memory device 1500 may communicate with the storage management system 1100 and the first and second storage devices 1200_1 and 1200_2 (e.g., based on a CXL.mem protocol). The storage management system 1100 may store data in the shared memory device 1500 or read data stored in the shared memory device 1500. The first and second storage devices 1200_1 and 1200_2 may store data in the shared memory device 1500 or read data stored in the shared memory device 1500.

The storage management system 1100 may be configured to manage the first and second storage devices 1200_1 and 1200_2, the first and second memory devices 1300_1 and 1300_2, the first and second CXL memory devices 1400_1 and 1400_2, and the shared memory device 1500 included in the storage server 1002. The first and second storage devices 1200_1 and 1200_2 may store data or output stored data according to control by the storage management system 1100. The first and second storage devices 1200_1 and 1200_2 may include storage media having large capacity, such as a solid state drive (SSD), but the scope of the disclosure is not limited thereto.

The storage management system 1100 may store data in the first and second storage devices 1200_1 and 1200_2 or read data stored in the first and second storage devices 1200_1 and 1200_2. For example, the storage management system 1100 may transmit a write command and write data to the first and second storage devices 1200_1 and 1200_2 in order to store data in the first and second storage devices 1200_1 and 1200_2. Alternatively, the storage management system 1100 may transmit a read command to the first and second storage devices 1200_1 and 1200_2 and receive data from the first and second storage devices 1200_1 and 1200_2 in order to read data stored in the first and second storage devices 1200_1 and 1200_2.

According to one or more embodiments, the storage management system 1100 and the first and second storage devices 1200_1 and 1200_2 may communicate with each other based on a predetermined interface. The predetermined interface may support at least one of various interfaces, such as universal serial bus (USB), small computer system interface (SCSI), peripheral component interconnect (PCI) express, advanced technology attachment (ATA), parallel ATA (PATA), serial ATA (SATA), serial attached SCSI (SAS), universal flash storage (UFS), nonvolatile memory express (NVMe), CXL, etc., but the scope of the disclosure is not limited thereto.

As capacitance of storage devices (or storage systems) has increased, a plurality of virtual machines having various service level agreements (hereinafter, referred to as a service level agreement (SLA)) may be simultaneously allocated to a storage system. In a large capacity storage system, a multi-tenant environment (or a multi-user environment) has been generalized. In particular, in the large capacity storage system, a plurality of virtual machines may share a storage resource, based on different SLA requirements, and thus, it is required to efficiently manage resources to guarantee satisfaction of the SLA to all of the plurality of virtual machines. By allocating a high performance memory resource to a virtual function corresponding to a virtual machine requiring a high SLA, interference, which may be caused by a virtual machine requiring a low SLA, may be reduced. By doing so, SLA violations may be prevented and the users' demands may be satisfied.

The storage management system 1100 may include an SLA manager 1110. The SLA manager 1110 may perform a resource allocation operation and a resource reallocation operation. The SLA manager 1110 may obtain SLA information, attribute information, state information, a workload characteristic, etc. The SLA manager 1110 may allocate an internal memory resource or an external memory resource to a plurality of virtual functions, based on at least one of the SLA information, the attribute information, the state information, and the workload characteristic. The SLA manager 1110 may allocate a memory resource to the plurality of virtual functions, by taking into account various SLA levels. For example, the memory resource may indicate a space in which metadata of the first and second storage devices 1200_1 and 1200_2 is stored. The internal memory resource and the external memory resource may store metadata corresponding to each of the plurality of virtual functions managed by the storage device.

According to one or more embodiments, the SLA manager 1110 may include hardware, software, or a combination thereof, configured to manage the resource allocation operation. Operations of the SLA manager 1110 are described in more detail with reference to the drawings hereinafter.

As described above, the storage device according to one or more embodiments may store the metadata not only in the internal memory resource, but also in the external memory resource. The storage server 1002 may allocate the memory resource to the plurality of virtual functions, by taking into account various SLA levels in a multi-user environment. Thus, the storage server 1002 may satisfy various SLA levels and may optimize the memory resource allocation. A method, performed by the server system 1000, of optimally allocating a resource, according to one or more embodiments, is described in more detail with reference to the drawings hereinafter.

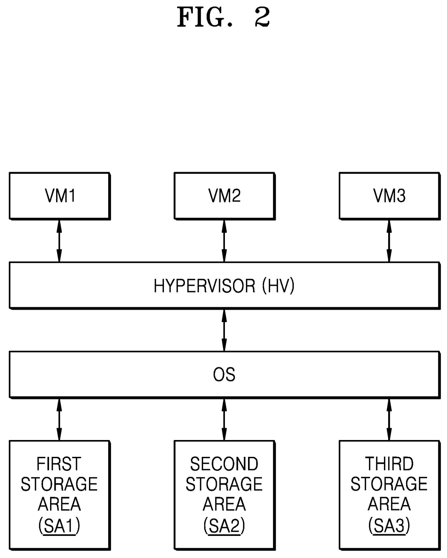

FIG. 2 is a block diagram of a software hierarchy of the server system 1000 of FIG. 1.

Referring to FIG. 2, an operating system OS, a hypervisor HV, a first virtual machine VM1, a second virtual machine VM2, and a third virtual machine VM3 may operate on a client server 1001. The operating system OS may include system software configured to control various hardware and resources included in the client server 1001, operate various programs, and support various services. The hypervisor HV may include a logical platform configured to operate the first to third virtual machines VM1 to VM3 operating on the client server 1001.

Each of the first to third virtual machines VM1 to VM3 may operate on the client server 1001. According to one or more embodiments, data related to the first virtual machine VM1 may be stored in a first storage area SA1 of the storage server 1002, and data related to the second virtual machine VM2 may be stored in a second storage area SA2 of the storage server 1002. Data related to the third virtual machine VM3 may be stored in a third storage area SA3 of the storage server 1002. According to one or more embodiments, the first storage area SA1 may correspond to the first storage device 1200_1, and the second storage area SA2 may correspond to the second storage device 1200_2. Alternatively, the first storage area SA1 may correspond to a first namespace, and the second storage area SA2 may correspond to a second namespace. A "namespace" may indicate a storage area logically or physically distinguished in the storage device. That is, data managed by the first virtual machine VM1 may be logically or physically distinguished from data managed by the second virtual machine VM2. Alternatively, the first storage area SA1 may correspond to a first zoned namespace, and the second storage area SA2 may correspond to a second zoned namespace. The zoned namespace may indicate a namespace divided into a plurality of zones in the storage device. The third storage area SA3 may be substantially the same as described above, and thus, its detailed description is omitted.

According to one or more embodiments, the operating system OS and first to third containers may operate on the client server 1001. For example, data related to the first container may be stored in the first storage area SA1 of the storage server 1002 and data related to the second container may be stored in the second storage area SA2 of the storage server 1002. Data related to the third container may be stored in the third storage area SA3 of the storage server 1002.

Hereinafter, for convenience of explanation, the terms "user," "virtual machine," "application," "client," "virtual functions," etc. are interchangeably used. These terms may have the same meaning or different meanings according to the context of use, and the meaning of each term may be understood in the context of the one or more embodiments described below.

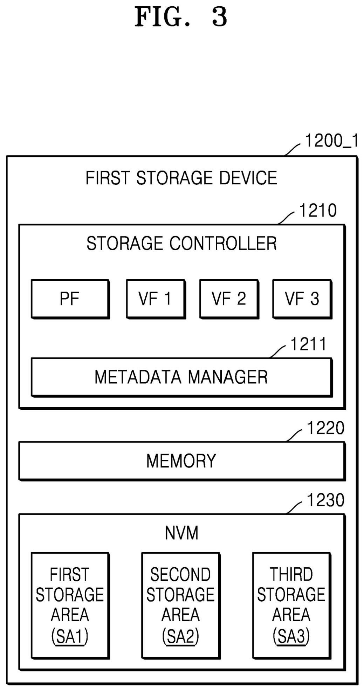

FIG. 3 is a more detailed block diagram of the first storage device 1200_1 of FIG. 1.

Referring to FIGS. 1 to 3, the first storage device 1200_1 may include a storage controller 1210, a memory 1220, and a nonvolatile memory device 1230, and the storage controller 1210 may include one or more physical functions PF, a plurality of virtual functions VF, for example, first to third virtual functions VF1 to VF3, and a metadata manager 1211 in order to support a virtualization function, such as single root input and/output virtualization (SR-IOV). For example, the storage controller 1210 may include the first to third virtual functions VF1 to VF3. For example, the first virtual function VF1 may correspond to the first virtual machine VM1, the second virtual function VF2 may correspond to the second virtual machine VM2, and the third virtual function VF3 may correspond to the third virtual machine VM3. However, the scope of the disclosure is not limited thereto, and the number of virtual functions may increase or decrease according to one or more embodiments.

In one or more embodiments, the storage controller may be implemented as one or more processors executing one or more instructions stored in memory (e.g., memory 1220). For example, the storage controller 1210 may execute one or more instructions and cause the storage device to provide a virtual function.

According to one or more embodiments, the nonvolatile memory device 1230 may include the first to third storage areas SA1 to SA3. According to one or more embodiments, data related to the first virtual function VF1 may be stored in the first storage area SA1, data related to the second virtual function VF2 may be stored in the second storage area SA2, and data related to the third virtual function VF3 may be stored in the third storage area SA3. The first storage area SA1 may correspond to the first virtual function VF1, the second storage area SA2 may correspond to the second virtual function VF2, and the third storage area SA3 may correspond to the third virtual function VF3.

With the SR-IOV function based on an NVMe interface, the first storage device 1200_1 may generate one or more virtual functions. The virtual functions may be realized in the storage controller 1210 of the first storage device 1200_1 in response to a request from the storage management system 1100, and the physical functions and the virtual functions may separately process data access requests from the storage management system 1100. Also, each virtual machine may correspond to any one physical function or virtual function, and each user may provide a command to the nonvolatile memory device 1230 through a virtual machine allocated thereto and a corresponding physical function (or virtual function).

The metadata manager 1211 may receive resource change information. The metadata manager 1211 may store metadata based on the resource change information. The metadata manager 1211 may allocate a memory resource for each of the plurality of virtual functions and each metadata type (or data type). For example, the first virtual machine VM1 may require a high SLA level, and the second virtual machine VM2 may require a low SLA level. The first virtual machine VM1 may correspond to the first virtual function VF1, and the second virtual machine VM2 may correspond to the second virtual function VF2. The first virtual machine VM1 may correspond to the first storage area SA1, and the second virtual machine VM2 may correspond to the second storage area SA2. The first virtual function VF1 may correspond to the first storage area SA1, and the second virtual function VF2 may correspond to the second storage area SA2. The first storage area SA1 may store data related to the first virtual machine VM1 or the first virtual function VF1, and the second storage area SA2 may store data related to the second virtual machine VM2 or the second virtual function VF2.

The first virtual machine VM1 may require a high SLA level, and thus, the metadata manager 1211 may allocate the internal memory resource to the first virtual function VF1. The second virtual machine VM2 may require a low SLA level, and thus, the metadata manager 1211 may allocate the external memory resource to the second virtual function VF2. For example, the metadata manager 1211 may store a mapping table corresponding to the second virtual function VF2 in the external memory resource, and the metadata manager 1211 may store the metadata corresponding to restoration information in the internal memory resource. That is, the metadata manager 1211 may allocate the memory resource, based on the SLA level and the metadata type (or the data type).

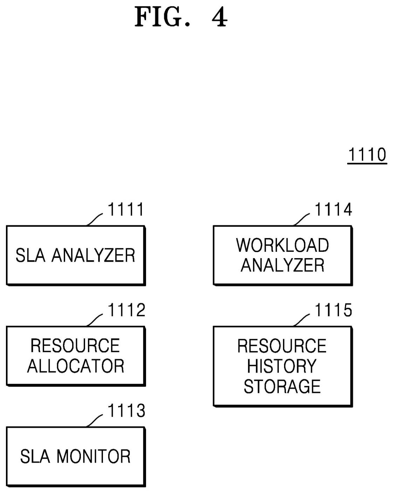

FIG. 4 is a more detailed block diagram of the SLA manager 1110 of FIG. 1.

Referring to FIGS. 1 and 4, the SLA manager 1110 may include an SLA analyzer 1111, a resource allocator 1112, an SLA monitor 1113, a workload analyzer 1114, and a resource history storage 1115.

The SLA analyzer 1111 may receive a plurality of pieces of SLA information from the client server 1001. For example, the SLA information may indicate a requirement of a virtual machine (or a user). According to one or more embodiments, the SLA information may include service level objective (SLO) information. The SLA information may include information about quality-of-service (QoS), availability, response time, performance, throughput, bandwidth, error rate, restoration time, etc. The SLA information may indicate a service level defined to be provided to a virtual machine (or a user or a client).

The SLA analyzer 1111 may receive the SLA information from each of the plurality of virtual machines. For example, the SLA analyzer 1111 may receive first SLA information from the first virtual machine VM1, and the SLA analyzer 1111 may receive second SLA information from the second virtual machine VM2.

The SLA analyzer 1111 may receive attribute information (or a property or a metric) from the first and second storage devices 1200_1 and 1200_2. For example, the attribute information may include at least one of the performance, response time, capacity, memory size, nonvolatile memory state, nonvolatile memory type, program method (or the number of bits stored in a memory cell) (for example, Single-Level Cell (SLC), Multi-Level Cell (MLC), Triple-Level Cell (TLC), Quad-Level Cell (QLC)), the number of program/erase times (or a program-erase (PE) cycle), endurance/reliability or durability, access frequency, lifespan, input/output operations per second (IOPS), performance (for example, performance per TB), throughput, and QoS (or service quality) of the first and second storage devices 1200_1 and 1200_2. For example, performance may refer to any of various operational metrics of a storage system, such as data throughput, latency, input/output operations per second (IOPS), or bandwidth. Quality of service (QoS) may refer to performance control metrics that define service levels provided to clients, including guaranteed minimum throughput, latency thresholds, or priority levels assigned to data operations. However, the scope of the disclosure is not limited thereto. The attribute information may indicate information about a storage attribute.

The SLA analyzer 1111 may analyze the attribute information and the SLA information and may generate an analysis result. The SLA analyzer 1111 may provide the analysis result to the resource allocator 1112.

According to one or more embodiments, the SLA analyzer 1111 may generate a resource allocation map, based on the attribute information and the SLA information. For example, the resource allocation map may include a mapping relationship between a user identifier corresponding to each of the plurality of virtual functions (or the plurality of virtual machines) and an allocated memory resource type. However, the scope of the disclosure is not limited thereto. For example, the resource allocation map may include a mapping relationship among the user identifier corresponding to each of the plurality of virtual functions, the metadata type, and the memory resource type.

The resource allocator 1112 may allocate a resource to each of the plurality of virtual functions. The resource allocator 1112 may receive the analysis result from the SLA analyzer 1111. The resource allocator 1112 may allocate the internal memory resource or the external memory resource to each of the plurality of virtual machines based on the analysis result. The internal memory resource may correspond to the memory 1220 of the first and second storage devices 1200_1 and 1200_2, and the external memory resource may correspond to the first and second memory devices 1300_1 and 1300_2, the first and second CXL memory devices 1400_1 and 1400_2, and the shared memory device 1500.

According to one or more embodiments, the resource allocator 1112 may allocate a resource to each of the plurality of storage areas. For example, the resource allocator 1112 may allocate the internal memory resource to the first storage area SA1 and the external memory resource to the second storage area SA2.

According to one or more embodiments, the metadata corresponding to each of the plurality of virtual functions, managed by the first and second storage devices 1200_1 and 1200_2, may be stored in the internal memory resource and the external memory resource.

According to one or more embodiments, the resource allocator 1112 may receive a workload characteristic with respect to each of the plurality of virtual machines from the workload analyzer 1114. The resource allocator 1112 may allocate, based on the analysis result and the workload characteristic, the internal memory resource or the external memory resource to the plurality of virtual functions.

According to one or more embodiments, the resource allocator 1112 may receive a monitoring result from the SLA monitor 1113. The resource allocator 1112 may allocate, based on the monitoring result and the analysis result, the internal memory resource or the external memory resource to the plurality of virtual functions (or the plurality of storage areas).

According to one or more embodiments, the resource allocator 1112 may refer to the resource history storage 1115. The resource allocator 1112 may search for a target resource allocation map from historical resource allocation maps included in the resource history storage 1115. The target resource allocation map may indicate a resource allocation map corresponding to the analysis result, the state information, the workload characteristic, the SLA information, and the attribute information. The target resource allocation map may indicate a resource allocation map generated in a similar situation to a current situation. The resource allocator 1112 may search for the target resource allocation map, based on at least one of the analysis result, the state information, the workload characteristic, the SLA information, and the attribute information. The resource allocator 1112 may use the found resource allocation map. The resource allocator 1112 may allocate, based on the found resource allocation map, the internal memory resource or the external memory resource to the plurality of virtual functions (or the plurality of storage areas).

According to one or more embodiments, the resource allocator 1112 may receive a resource reallocation request from the SLA monitor 1113. The resource allocator 1112 may perform a resource reallocation operation in response to the resource reallocation request. The resource allocator 1112 may collect the information again. The resource allocator 1112 may obtain changed or new information. The resource allocator 1112 may reallocate the resource, based on the SLA information, the attribute information, the monitoring result, or the workload characteristic. The resource allocator 1112 may determine resource reallocation, based on at least one of the SLA information, the attribute information, the monitoring result, or the workload characteristic. The resource allocator 1112 may update the resource allocation map, based on at least one of the SLA information, the attribute information, the monitoring result, and the workload characteristic.

The SLA monitor 1113 may monitor whether the SLA information of the plurality of virtual functions (or the virtual machines or the plurality of storage areas) is satisfied or not. The SLA monitor 1113 may determine whether there is an SLA violation or not. The SLA monitor 1113 may determine whether or not a service satisfying the SLA information is provided to the plurality of virtual machines. The SLA monitor 1113 may analyze data in real time and predict the possibility of an SLA violation.

According to one or more embodiments, when the SLA monitor 1113 determines that the SLA information is not satisfied with respect to at least one of the plurality of virtual machines, the SLA monitor 1113 may transmit a resource reallocation request to the resource allocator 1112. That is, the SLA monitor 1113 may transmit the resource reallocation request to the resource allocator 1112, when the SLA monitor 1113 determines that there is an SLA violation in any one of the plurality of virtual machines (or the plurality of virtual functions).

According to one or more embodiments, the SLA monitor 1113 may monitor the state of the memory resource. The SLA monitor 1113 may monitor the state of the memory 1220 of the first and second storage devices 1200_1 and 1200_2, the first and second memory devices 1300_1 and 1300_2, the shared memory device 1500, and the first and second CXL memory devices 1400_1 and 1400_2. The SLA monitor 1113 may generate state information of the memory resource. The SLA monitor 1113 may provide the state information to the resource allocator 1112. The state information may include the traffic, use rate, response time, frequency, performance, etc. of the memory resource.

The workload analyzer 1114 may monitor an input and an output between the plurality of virtual machines and the storage device and may extract the workload characteristic. The workload analyzer 1114 may detect and analyze a user input and output. For example, the workload analyzer 1114 may monitor the user input and output between the client server 1001 and the first and second storage devices 1200_1 and 1200_2. For example, it is assumed that data related to the first virtual machine VM1 may be stored in the first storage device 1200_1. The workload analyzer 1114 may monitor a read/write request and data transmitted and received between the first virtual machine VM1 and the first storage device 1200_1, in order to extract the workload characteristic of the first virtual machine VM1.

The workload analyzer 1114 may extract the workload characteristic of the virtual machine based on a monitoring result. For example, the workload analyzer 1114 may determine whether or not the first virtual machine VM1 has a first workload characteristic. For example, the workload characteristic may include at least one of read intensive, write intensive, a read rate, a workload volume, a work set size, cache state information (for example, a hit rate), and a workflow. However, the scope of the disclosure is not limited thereto.

The resource history storage 1115 may store historical resource allocation maps. The historical resource allocation maps stored in the resource history storage 1115 may be used as input data of a neural network (NN).

In one or more embodiments, the SLA manager 1110, and its sub-modules, may implemented as software stored in a memory of the storage management system 1100 and executed by at least one processor of the storage management system 1100.

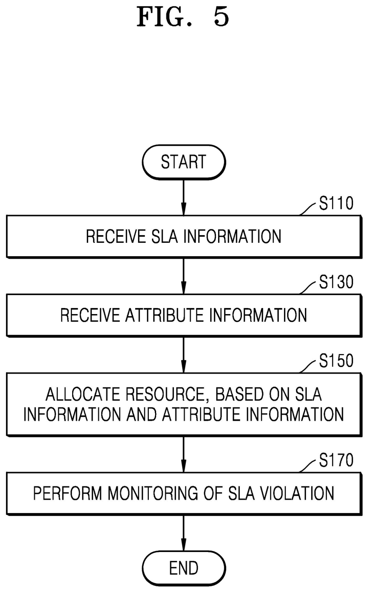

FIG. 5 is a flowchart of an example of an operating method of the storage server 1002 of FIG. 1.

Referring to FIGS. 1 and 5, the storage server 1002 may perform an SLA-based resource allocation operation. In operation S110, the storage server 1002 may obtain SLA information from a plurality of virtual machines. The storage server 1002 may receive a plurality of pieces of SLA information from the client server 1001. In operation S130, the storage server 1002 may obtain attribute information from the storage device. The storage management system 1100 may receive the attribute information from the first and second storage devices 1200_1 and 1200_2.

In operation S150, the storage server 1002 may allocate resource (e.g., to the plurality of virtual machines, the plurality of virtual functions or the plurality of storage areas) based on the SLA information and/or the attribute information. In operation S170, the storage server 1002 may perform monitoring of whether or not an SLA is satisfied. The storage management system 1100 may determine whether or not an SLA of each of the plurality of virtual machines is violated. Alternatively, the storage management system 1100 may determine whether or not an SLA of each of the plurality of virtual functions is violated. Alternatively, the storage management system 1100 may determine whether or not an SLA of each of the plurality of storage areas is violated. The storage management system 1100 may monitor a user input and output between the client server 1001 and the first and second storage devices 1200_1 and 1200_2. For example, the storage management system 1100 may monitor a read/write request and data transmitted and received between the first virtual machine VM1 and the first storage device 1200_1. The storage management system 1100 may determine, based on a result of the monitoring and the SLA information, whether or not the SLA is satisfied with respect to each of the plurality of virtual machines. Alternatively, the storage management system 1100 may determine whether or not the SLA is satisfied, by referring to a performance value measured by the storage device.

As described above, the storage server 1002 according to one or more embodiments may satisfy the SLA level of each of the plurality of virtual machines in a multi-tenant environment. The storage server 1002 may optimally allocate an internal memory resource and an external memory resource to the plurality of virtual functions, based on various SLA levels. Thus, the storage server 1002 may satisfy the SLA levels and improve the service quality.

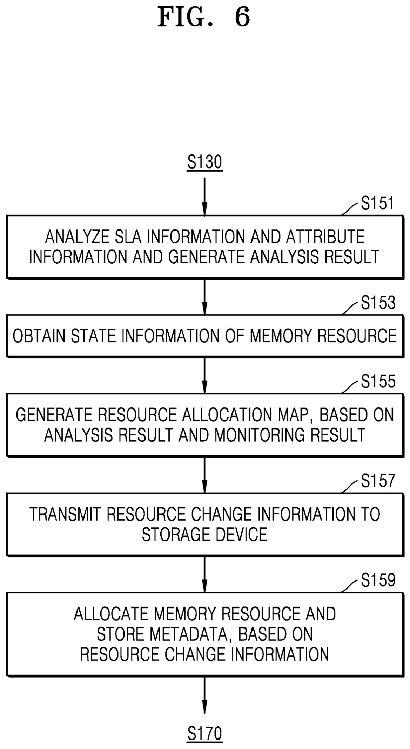

FIG. 6 is a more detailed flowchart of operation S150 of FIG. 5.

Referring to FIGS. 1, 5, and 6, the storage server 1002 may allocate at least one of the internal memory resource or the external memory resource to each of the plurality of virtual functions. Operation S150 of FIG. 5 may include operations S151 to S159.

In operation S151, the storage server 1002 may analyze the SLA information and the attribute information and generate an analysis result. In operation S153, the storage server 1002 may obtain state information of a memory resource. The memory resource may include the external memory resource and the internal memory resource. The external memory resource may correspond to the memory device group 1003, and the internal memory resource may correspond to the memory 1220. For example, the state information may include the response time, frequency, etc.

In operation S155, the storage server 1002 may generate the resource allocation map, based on the analysis result and the state information. In operation S157, the storage server 1002 may transmit resource change information to the first and second storage devices 1200_1 and 1200_2. For example, the resource change information may include the resource allocation map.

In operation S159, the storage server 1002 may allocate, based on the resource change information, the memory resource to the plurality of virtual functions. The storage server 1002 may store metadata of each of the plurality of virtual functions in the corresponding memory resource.

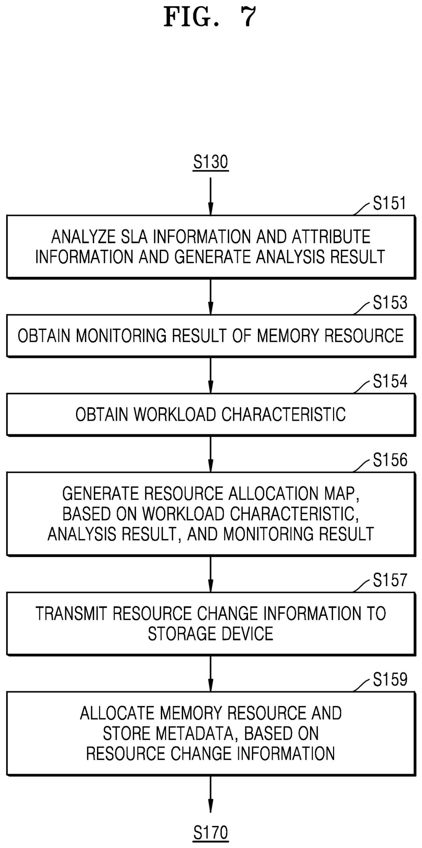

FIG. 7 is a more detailed flowchart of operation S150 of FIG. 5.

Referring to FIGS. 1, 5, 6, and 7, the storage server 1002 may allocate at least one of the internal memory resource or the external memory resource to each of the plurality of virtual functions. Operation S150 of FIG. 5 may include operations S151 to S159.

In operation S151, the storage server 1002 may analyze the SLA information and the attribute information and generate an analysis result. In operation S153, the storage server 1002 may obtain state information of a memory resource. The memory resource may include the external memory resource and the internal memory resource. The external memory resource may correspond to the memory device group 1003, and the internal memory resource may correspond to the memory 1220. For example, the state information may include the response time, frequency, etc.

In operation S154, the storage server 1002 may obtain the workload characteristic. The storage server 1002 may monitor an input and output between the plurality of virtual machines and the storage device. The storage server 1002 may extract the workload characteristic. In operation S156, the storage server 1002 may generate the resource allocation map, based on the workload characteristic, the analysis result, and the state information. In operation S157, the storage server 1002 may transmit resource change information to the first and second storage devices 1200_1 and 1200_2. For example, the resource change information may include the resource allocation map.

In operation S159, the storage server 1002 may allocate the memory resource to the plurality of virtual functions based on the resource change information. The storage server 1002 may store metadata of each of the plurality of virtual functions in the corresponding memory resource.

As described above, the storage server 1002 may generate the resource allocation map, based on at least one of the SLA information, the attribute information, the state information, and the workload characteristic. The first and second storage devices 1200_1 and 1200_2 may allocate the memory resource to store the metadata, to each of the plurality of virtual functions, based on the resource change information including the resource allocation map. Thus, the storage server 1002 may minimize the interference between users and improve the performance in an environment in which various SLA levels coexist.

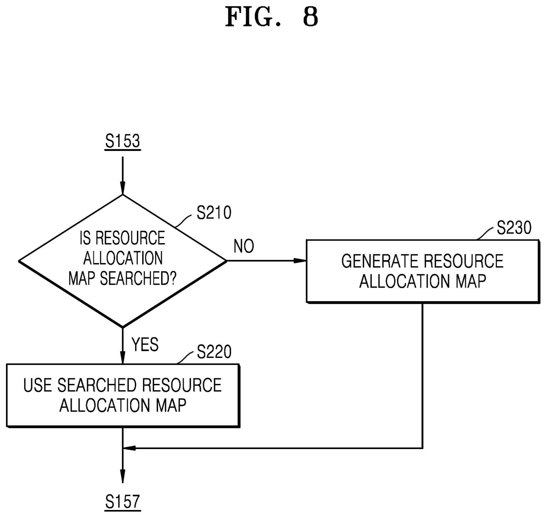

FIG. 8 is a more detailed flowchart of operation S155 of FIG. 6.

Referring to FIGS. 1, 6, and 8, operation S155 of FIG. 6 may include operations S210 to S230. The storage server 1002 may obtain the resource allocation map.

In operation S210, the storage server 1002 may search for a resource allocation map in a resource history storage. The storage server 1002 may search for the resource allocation map in the resource history storage, based on at least one of the analysis result, the state information, and the workload characteristic.

The storage server 1002 may use a previously generated resource allocation map. The storage server 1002 may search for a resource allocation map corresponding to the analysis result from among previously generated resource allocation maps in the resource history storage. When the storage server 1002 has found the resource allocation map, the storage server 1002 may perform operation S220, and when the storage server 1002 has not found the resource allocation map, the storage server 1002 may perform operation S230.

In operation S220, the storage server 1002 may use the found resource allocation map. The storage server 1002 may use the resource allocation map searched in the resource history storage. The storage server 1002 may use the searched resource allocation map, instead of newly generating a resource allocation map.

In operation S230, the storage server 1002 may generate the resource allocation map. When the storage server 1002 has not found the resource allocation map corresponding to the analysis result, the storage server 1002 may generate a new resource allocation map.

As described above, the storage server 1002 may search for, based on the analysis result, the resource allocation map in the resource history storage. When the storage server 1002 has found the resource allocation map, the storage server 1002 may allocate, based on the resource allocation map, the internal memory resource or the external memory resource to each of the plurality of virtual functions. When the storage server 1002 has not found the resource allocation map, the storage server 1002 may generate the resource allocation map, based on the SLA information, the attribute information, and the state information of the memory resource.

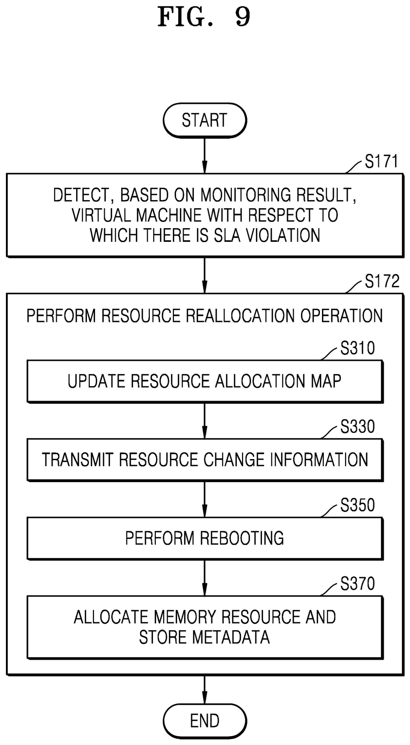

FIG. 9 is a more detailed flowchart of operation S170 of FIG. 5.

Referring to FIGS. 1, 5, 7, and 9, operation S170 of FIG. 5 may include operations S171 and S172. Operation S172 may include operations S310 to S370. In operation S171, the storage server 1002 may detect, based on the monitoring result, a virtual machine with respect to which the SLA is violated. In operation S172, the storage server 1002 may perform a resource reallocation operation with respect to a virtual function corresponding to the detected virtual machine.

In operation S310, the storage server 1002 may update the resource allocation map. The storage server 1002 may obtain changed SLA information, changed attribute information, the state information, the workload characteristic, etc. The storage server 1002 may generate a new resource allocation map, based on the changed SLA information, the changed attribute information, the state information, the workload characteristic, etc. That is, the storage server 1002 may update the resource allocation map. In operation S330, the storage server 1002 may transmit the resource change information. The storage server 1002 may transmit the resource change information including the resource allocation map to the first storage device 1200_1. In operation S350, the storage server 1002 may perform a reboot operation. The storage server 1002 may perform power on/off through a baseboard management controller (BMC). The storage server 1002 may perform power-off, may perform power-on, and then, may rearrange the resource.

In operation S370, the storage server 1002 may allocate the memory resource to each of the plurality of virtual functions. The storage server 1002 may store the metadata corresponding to the plurality of virtual functions in the corresponding memory resource. The first storage device 1200_1 may store the metadata in the corresponding memory resource, based on the resource change information. As described above, the storage server 1002 may perform the resource reallocation operation, when the resource reallocation condition including the occurrence of the SLA violation is satisfied. Thus, the storage server 1002 may efficiently use the resource and minimize SLA violation.

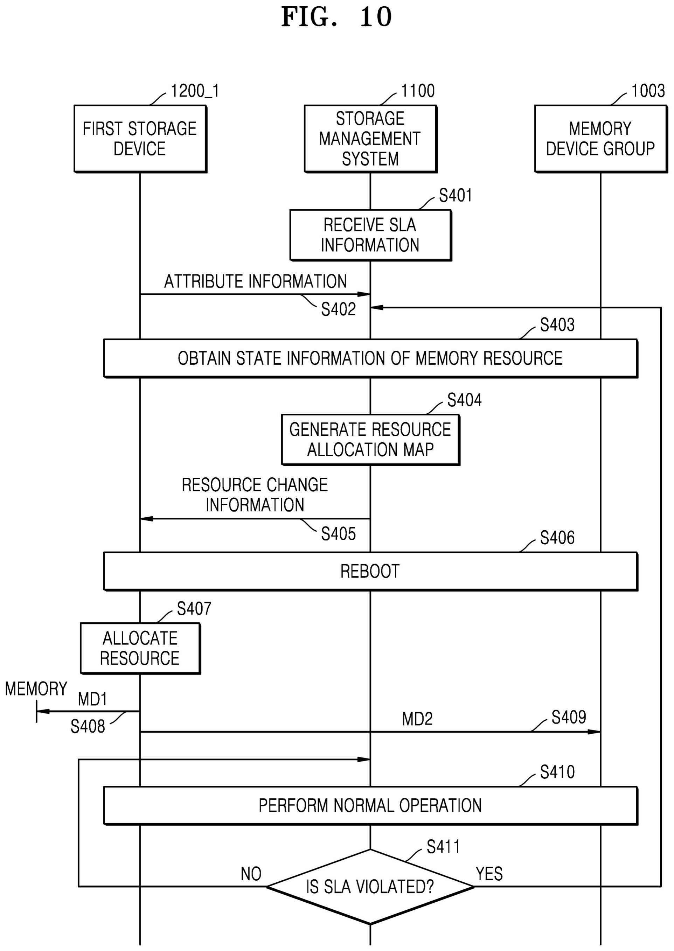

FIG. 10 is a flowchart of an example of an operating method of the storage server 1002 of FIG. 1.

Referring to FIGS. 1 and 10, in operation S401, the storage management system 1100 may receive SLA information. In operation S402, the storage management system 1100 may receive attribute information from the first storage device 1200_1. However, the scope of the disclosure is not limited thereto. FIG. 10 illustrates that only the first storage device 1200_1 transmits the attribute information. However, the second storage device 1200_2 may also transmit the attribute information to the storage management system 1100.

In operation S403, the storage server 1002 may obtain state information of a memory resource. For example, the storage server 1002 may obtain state information of an internal memory resource. The storage server 1002 may obtain state information of an external memory resource. The storage management system 1100 may receive state information of the memory 1220 from the first storage device 1200_1. The storage server 1002 may obtain state information of the memory device group 1003. The storage management system 1100 may receive state information of the first and second memory devices 1300_1 and 1300_2. The storage management system 1100 may receive state information of the first and second CXL memory devices 1400_1 and 1400_2. The storage management system 1100 may receive state information of the shared memory device 1500.

In operation S404, the storage management system 1100 may generate a resource allocation map. The storage management system 1100 may generate the resource allocation map, based on at least one of the SLA information, the attribute information, and the state information.

In operation S405, the storage management system 1100 may transmit resource change information to the first storage device 1200_1. According to one or more embodiments, the resource change information may include a resource allocation map. According to one or more embodiments, the resource change information may include memory resource allocation information with respect to each of a plurality of virtual functions. The storage management system 1100 may transmit the resource change information to the first storage device 1200_1 through a set-feature command. For example, the storage management system 1100 may transmit the set-feature command including the resource change information to the first storage device 1200_1. The storage management system 1100 may transmit, to the first storage device 1200_1, the set-feature command including an address of a storage area in which the resource change information is stored. The first storage device 1200_1 may receive the resource change information.

In operation S406, the storage server 1002 may perform a reboot operation. Alternatively, the storage server 1002 may perform a reset operation. The storage management system 1100 may further include a BMC. The storage management system 1100 may transmit a storage system reboot request to the BMC. The BMC may reboot the storage system in response to the storage system reboot request. According to one or more embodiments, the storage management system 1100 may reset the first and second storage devices 1200_1 and 1200_2.

In operation S407, the first storage device 1200_1 may allocate the memory resource. The first storage device 1200_1 may allocate the memory resource based on resource change information. The first storage device 1200_1 may allocate the memory resource to each of the plurality of virtual functions based on the resource change information. The first storage device 1200_1 may allocate, to each of the plurality of virtual functions, based on the resource change information, an area to store metadata corresponding to each of the plurality of virtual functions. For example, the first storage device 1200_1 may allocate the internal memory resource to a first virtual function VF1 and allocate the external memory resource to a second virtual function VF2. The first storage device 1200_1 may determine to store first metadata MD1 corresponding to the first virtual function VF1 in the memory 1220. The first storage device 1200_1 may determine to store second metadata MD2 corresponding to the second virtual function VF2 in the memory device group 1003.

In operation S408, the first storage device 1200_1 may store the first metadata MD1 in the memory 1220. The first storage device 1200_1 may store the first metadata MD1, which is the metadata of the first virtual function VF1, in the internal memory resource. For example, the first storage device 1200_1 may read the first metadata MD1 in the nonvolatile memory device 1230 and store the first metadata MD1 in the memory 1220.

According to one or more embodiments, operation S408 may be omitted. When the first metadata MD1 is already stored in the memory 1220 before the resource change information is received, the first storage device 1200_1 may skip the operation of storing the first metadata MD1 in the memory 1220.

In operation S409, the first storage device 1200_1 may store the second metadata MD2 in the memory device group 1003. The first storage device 1200_1 may store the second metadata MD2, which is the metadata of the second virtual function VF2, in the external memory resource. For example, the first storage device 1200_1 may read the second metadata MD2 in the nonvolatile memory device 1230 and store the second metadata MD2 in the memory device group 1003. For example, the first storage device 1200_1 may store the second metadata MD2 in the CXL memory device 1400_1. For example, the first storage device 1200_1 may read the second metadata MD2 in the memory 1220 and transmit the second metadata MD2 to the memory device group 1003.

In operation S410, the storage server 1002 may perform a normal operation. The storage server 1002 may perform the normal operation based on the allocated memory resource. In operation S411, the storage management system 1100 may determine whether or not there is an SLA violation. The storage management system 1100 may determine whether or not there is an SLA violation with respect to each of the plurality of virtual machines. The storage management system 1100 may detect a virtual machine, with respect to which SLA violation occurs. When the SLA violation occurs in a certain virtual machine, the storage management system 1100 may perform operation S403, and when there is no virtual machine with respect to which the SLA violation occurs, the storage management system 1100 may perform operation S410.

When there is no SLA violation, the storage server 1002 may perform the normal operation based on the memory resource currently allocated. When there is an SLA violation, the storage server 1002 may reallocate the memory resource.

As described above, the first storage device 1200_1 may move a portion of metadata to the external memory resource. The first storage device 1200_1 may store the metadata in the internal memory resource or the external memory resource based on various SLA levels. The first storage device 1200_1 may allocate, based on various SLA levels, the memory resource to each of the plurality of virtual functions, in order to store the metadata corresponding to each of the plurality of virtual functions. Also, the first storage device 1200_1 may allocate the memory resource for each metadata or data type. For example, the first storage device 1200_1 may store the metadata in the internal memory resource and store user data in the external memory resource. Here, the user data indicates user data stored for a data cache of the first storage device 1200_1.

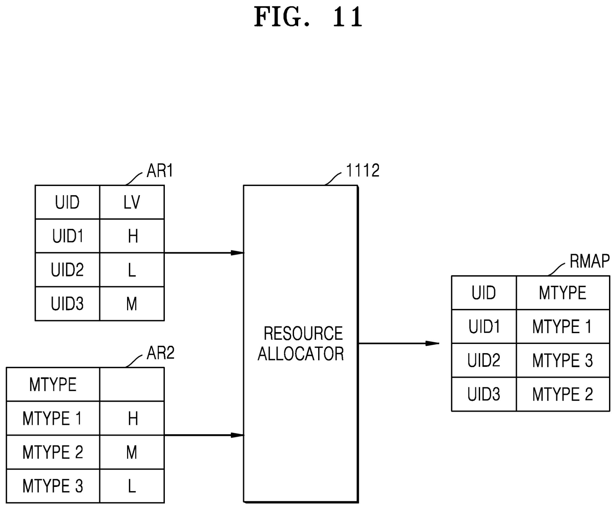

FIG. 11 is a diagram for describing an operation of the storage server 1002 of FIG. 1.

Referring to FIGS. 1 and 11, the SLA analyzer 1111 may obtain the SLA information and the attribute information. The SLA analyzer 1111 may perform an analysis operation, based on the SLA information and the attribute information. The SLA analyzer 1111 may generate an analysis result. The SLA analyzer 1111 may provide the analysis results to the resource allocator 1112.

Hereinafter, it is assumed that the first to third virtual machines VM1 to VM3 operate. The storage management system 1100 may identify the first to third virtual machines VM1 to VM3 and the first to third virtual functions VF1 to VF3 through user identifiers. A first user identifier UID1 may correspond to the first virtual machine VM1, a second user identifier UID2 may correspond to the second virtual machine VM2, and a third user identifier UID3 may correspond to the third virtual machine VM3. The first user identifier UID1 may correspond to the first virtual function VF1, the second user identifier UID2 may correspond to the second virtual function VF2, and the third user identifier UID3 may correspond to the third virtual function VF3.

First SLA information SLAI1 may correspond to SLA information of the first virtual machine VM1, second SLA information SLAI2 may correspond to SLA information of the second virtual machine VM2, and third SLA information SLAI3 may correspond to SLA information of the third virtual machine VM3.

The storage management system 1100 may receive the first SLA information SLAI1 from the first virtual machine VM1, the second SLA information SLAI2 from the second virtual machine VM2, and the third SLA information SLAI3 from the third virtual machine VM3. The first SLA information SLAI1 may correspond to the first virtual machine VM1, the second SLA information SLAI2 may correspond to the second virtual machine VM2, and the third SLA information SLAI3 may correspond to the third virtual machine VM3.

For example, the SLA analyzer 1111 may generate a first analysis result AR1, based on the SLA information. The first analysis result AR1 may correspond to a result of assessing the SLA level of each virtual machine. For example, the first SLA information SLAI1 may correspond to high performance or high specifications, the second SLA information SLAI2 may correspond to low performance or low specifications, and the third SLA information SLAI3 may correspond to intermediate performance or intermediate specifications. Accordingly, the SLA analyzer 1111 may set the first virtual machine VM1 as a first level H, the second virtual machine VM2 as a third level L, and the third virtual machine VM3 as a second level M.

The SLA analyzer 1111 may generate the first analysis result AR1 including a user's level table. The first analysis result AR1 (that is, the user's level table) may include a first entry including the first user identifier UID1 and the first level H, a second entry including the second user identifier UID2 and the third level L, and a third entry including the third user identifier UID3 and the second level M.

The storage server 1002 may include an internal memory resource and an external memory resource. The internal memory resource and the external memory resource may be determined based on the first and second storage devices 1200_1 and 1200_2. For example, when a memory resource exists in the first and second storage devices 1200_1 and 1200_2, the memory resource may correspond to the internal memory resource. That is, the memory 1220 may correspond to the internal memory resource. When a memory resource exists outside the first and second storage devices 1200_1 and 1200_2, the memory resource may correspond to the external memory resource. That is, the first and second memory devices 1300_1 and 1300_2, the first and second CXL memory devices 1400_1 and 1400_2, and the shared memory device 1500 may correspond to the external memory resource.

The storage server 1002 may include a plurality of types of memory resources. For example, the storage server 1002 may include memories of first to fourth memory types MTYPE1 to MTYPE4. For example, the memory 1220 may correspond to the memory resource of the first memory type MTYPE1. The first and second host memory buffers HMB1 and HMB2 of the first and second memory devices 1300_1 and 1300_2 may correspond to the memory resource of the second memory type MTYPE2. The first and second CXL memory devices 1400_1 and 1400_2 may correspond to the memory resource of the third memory type MTYPE3. The shared memory device 1500 may correspond to the memory resource of the fourth memory type MTYPE4. That is, the memory 1220 may correspond to the first memory type MTYPE1, the first and second host memory buffers HMB1 and HMB2 may correspond to the second memory type MTYPE2, and the first and second CXL memory devices 1400_1 and 1400_2 may correspond to the third memory type MTYPE3. The shared memory device 1500 may correspond to the fourth memory type MTYPE4. However, the scope of the disclosure is not limited thereto. The number of memory types may increase or decrease according to one or more embodiments. The storage server 1002 may include memory resources of first to sixth memory types. The first host memory buffer HMB1 may correspond to the second memory type, the second host memory buffer HMB2 may correspond to the third memory type, the CXL memory device 1400_1 may correspond to the fourth memory type, the CXL memory device 1400_2 may correspond to the fifth memory type, and the shared memory device 1500 may correspond to the sixth memory type.

The SLA analyzer 1111 may generate, based on the attribute information, a second analysis result AR2 including a resource level table. The second analysis result AR2 (that is, the resource level table) may include a fourth entry including the first memory type MTYPE1 and the first level H, a fifth entry including the second memory type MTYPE2 and the second level M, and a sixth entry including the third memory type MTYPE3 and the third level L.

The SLA analyzer 1111 may transmit the first analysis result AR1 and the second analysis result AR2 to the resource allocator 1112. The resource allocator 1112 may receive the first analysis result AR1 and the second analysis result AR2 from the SLA analyzer 1111. The resource allocator 1112 may generate a resource allocation map RMAP, based on the first and second analysis results AR1 and AR2. However, the scope of the disclosure is not limited thereto. The resource allocator 1112 may generate the resource allocation map RMAP, based on at least one of the analysis result, the state information, the workload characteristic, and the resource history storage (e.g., historical resource allocation maps stored in the resource history storage 1115).

Hereinafter, for convenience of explanation, the terms "user identifier," "virtual machine," virtual function," etc. are interchangeably used. These terms may have the same meaning or different meanings according to the context of embodiments, and the meaning of each term may be understood according to the context of embodiments described below.

According to one or more embodiments, the resource allocator 1112 may map the virtual machine (or the virtual function) with the resource memory, based on the levels. The resource allocator 1112 may map the memory type of a level corresponding to the level of the user identifier (or the virtual machine) with the user identifier (or the virtual machine). For example, because the level of the first user identifier UID1 corresponds to the first level H, the resource allocator 1112 may allocate the first memory type MTYPE1 having the first level H to the first user identifier UID1. That is, the resource allocator 1112 may map the first user identifier UID1 with the first memory type MTYPE1. The resource allocator 1112 may allocate the memory 1220 to the first virtual function VF1.

Because the level of the second user identifier UID2 corresponds to the third level L, the third memory type MTYPE3 having the third level L may be allocated to the second user identifier UID2. That is, the resource allocator 1112 may map the second user identifier UID2 with the third memory type MTYPE3. The resource allocator 1112 may allocate the first and second CXL memory devices 1400_1 and 1400_2 to the second virtual function VF2.

Because the level of the third user identifier UID3 corresponds to the second level M, the second memory type MTYPE2 having the second level M may be allocated to the third user identifier UID3. That is, the resource allocator 1112 may map the third user identifier UID3 with the second memory type MTYPE2. The resource allocator 1112 may allocate the first and second host memory buffers HMB1 and HMB2 to the third virtual function VF3.

The resource allocation map RMAP may include the mapping relationship between the user identifiers and the memory types. According to one or more embodiments, the resource allocation map RMAP may include the mapping information between the user identifiers and the memory types. For example, the resource allocation map RMAP may include the mapping information between the first user identifier UID1 and the first memory type MTYPE1, the mapping information between the second user identifier UID2 and the third memory type MTYPE3, and the mapping information between the third user identifier UID3 and the second memory type MTYPE2.

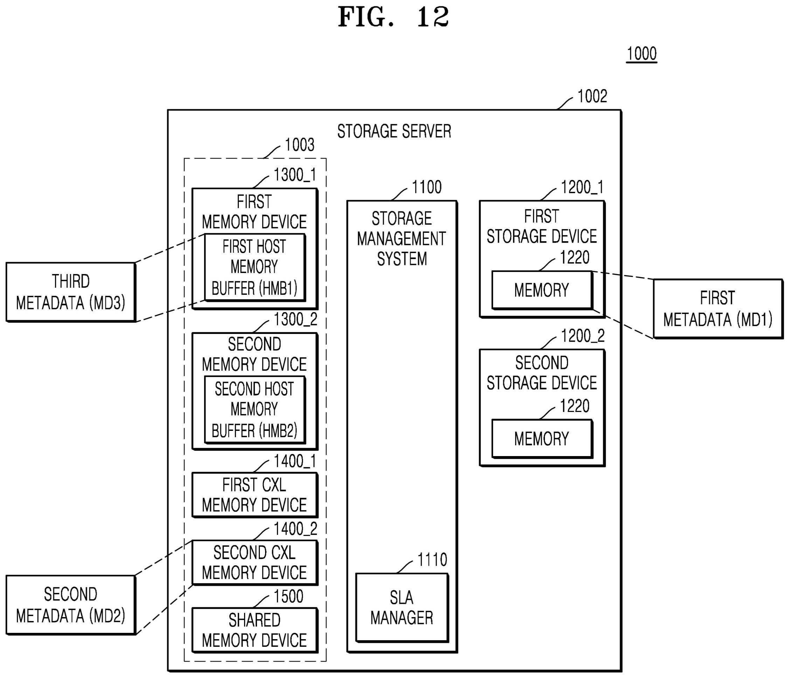

FIG. 12 is a diagram for describing an operation of the storage server 1002 of FIG. 1.

Referring to FIGS. 1, 11, and 12, the SLA manager 1110 may generate the resource allocation map. The SLA manager 1110 may generate the resource change information, based on the resource allocation map. The resource change information may include the resource allocation map. The SLA manager 1110 may transmit the resource change information to the first storage device 1200_1.

The first storage device 1200_1 may receive the resource change information including the resource allocation map RMAP. The first storage device 1200_1 may allocate the memory resource to the plurality of virtual functions based on the resource change information. The first storage device 1200_1 may store the metadata or the data corresponding to the plurality of virtual functions in the memory resource.

The first storage device 1200_1 may allocate the memory 1220 to the first virtual function corresponding to the first virtual machine. The first storage device 1200_1 may allocate the CXL memory device 1400_2 to the second virtual function corresponding to the second virtual machine. The first storage device 1200_1 may allocate the first host memory buffer HMB1 to the third virtual function corresponding to the third virtual machine.

The first storage device 1200_1 may store the first metadata corresponding to the first virtual machine in the memory 1220. The first storage device 1200_1 may store the first metadata corresponding to the first virtual function in the memory 1220. The first storage device 1200_1 may store the second metadata corresponding to the second virtual machine in the CXL memory device 1400_2. The first storage device 1200_1 may store the second metadata corresponding to the second virtual function in the CXL memory device 1400_2. The first storage device 1200_1 may store the third metadata corresponding to the third virtual machine in the first host memory buffer HMB1. The first storage device 1200_1 may store the third metadata corresponding to the third virtual function in the first host memory buffer HMB1.

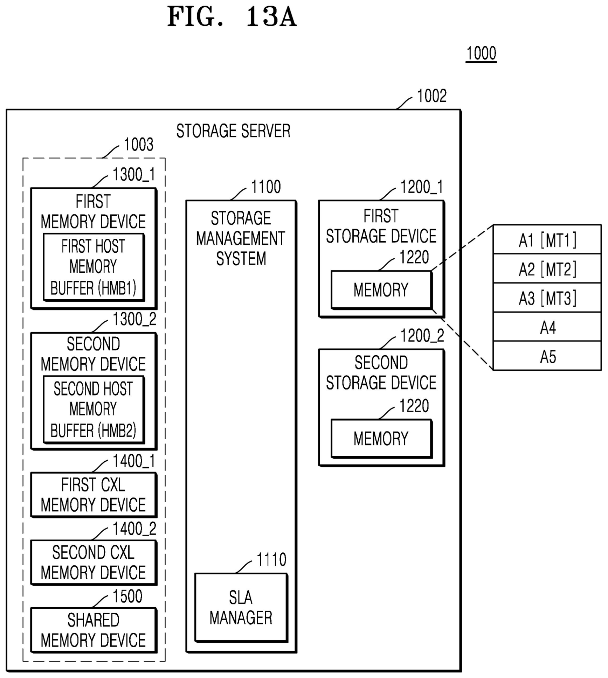

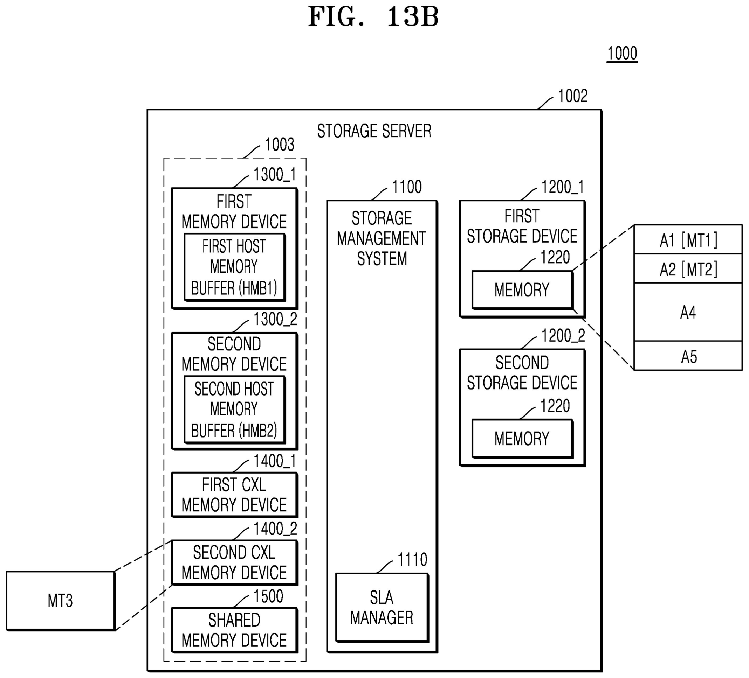

FIGS. 13A and 13B are diagrams for describing an operation of the storage server 1002 of FIG. 1.

Referring to FIGS. 1, 13A, and 13B, the storage server 1002 may perform a resource reallocation operation. The storage server 1002 may determine whether or not a resource reallocation condition is satisfied. When the resource reallocation condition is satisfied, the storage server 1002 may perform the resource reallocation operation. When the resource reallocation condition is not satisfied, the storage server 1002 may not perform the resource reallocation operation. For example, the resource reallocation condition may be satisfied when SLA violation occurs, SLA information is changed, attribute information is changed, state information is changed, or a workload characteristic is changed.

The first storage device 1200_1 may store the metadata and data with respect to the plurality of virtual functions in the memory 1220. For example, the first storage device 1200_1 may store a first mapping table MT1 corresponding to the first virtual function, a second mapping table MT2 corresponding to the second virtual function, and a third mapping table MT3 corresponding to the third virtual function in the memory 1220. The memory 1220 may include first to fifth areas A1 to A5. However, the scope of the disclosure is not limited thereto, and the first to fifth areas A1 to A5 may be fixed or changed. That is, the sizes of the first to fifth areas A1 to A5 may be changed, and the number of areas included in the memory 1220 may decrease or increase according to one or more embodiments.

The first mapping table MT1 corresponding to the first virtual function may be stored in the first area A1. The second mapping table MT2 corresponding to the second virtual function may be stored in the second area A2. The third mapping table MT3 corresponding to the third virtual function may be stored in the third area A3.

The fourth area A4 may be a management data cache area. The fourth area A4 may store metadata or data used for a management operation. For example, the fourth area A4 may be used for a garbage collection operation. While the first storage device 1200_1 is performing the garbage collection operation, the first storage device 1200_1 may store valid page data of a sacrificial block in the fourth area A4. The first storage device 1200_1 may store the valid page data stored in the fourth area in a free block.

The fifth area A5 may be an input and output data cache area. The fifth area A5 may store user data of an input and output operation (a write or read operation). For example, the first storage device 1200_1 may store the user data in the memory 1220 in response to a write command. The first storage device 1200_1 may read the user data stored in the memory 1220 and may store the user data in the nonvolatile memory device 1230. The first storage device 1200_1 may read the user data in the nonvolatile memory device 1230 in response to a read command and may store the user data in the memory 1220. The first storage device 1200_1 may read the user data stored in the memory 1220 and may provide the user data to the storage management system 1100.

The storage management system 1100 may determine that the resource reallocation condition is satisfied. The storage management system 1100 may perform the resource reallocation operation. The storage management system 1100 may collect information required to perform the resource reallocation operation. The storage management system 1100 may update the resource allocation map, based on the changed SLA information, the changed attribute information, the current state information, and the current workload characteristic. The storage management system 1100 may generate a new resource allocation map.

According to one or more embodiments, the storage management system 1100 may generate a state profile, based on the changed SLA information, the changed attribute information, the current state information, and the current workload characteristic. The storage management system 1100 may retrieve the resource allocation map corresponding to the state profile from the resource history storage. The storage management system 1100 may use the retrieved resource allocation map.

The updated resource allocation map may include mapping information between the first user identifier UID1 and the first memory type MTYPE1, mapping information between the second user identifier UID2 and the first memory type MTYPE1, and mapping information between the third user identifier UID3 and the third memory type MTYPE3.

The storage management system 1100 may analyze the changed SLA information, the changed attribute information, the current state information, and the current workload characteristic and may determine that an SLA of the third virtual function is satisfied, an SLA of the first virtual function is violated, and an SLA of the second virtual function is violated. Thus, the storage management system 1100 may determine to allocate the CXL memory device 1400_2 corresponding to the third level L to the third virtual function. The storage management system 1100 may determine to increase the size of the management data cache area, in order to satisfy the SLA of the first virtual function and the SLA of the second virtual function. The storage management system 1100 may increase the size of the management data cache area in order to prevent deterioration of input and output performance due to a management operation such as garbage collection in the first storage device 1200_1. However, the disclosure is not limited thereto, and the storage management system 1100 may increase the size of other areas.

The storage management system 1100 may generate the resource change information, based on the updated resource allocation map (or the newly retrieved resource allocation map). The storage management system 1100 may transmit the resource change information to the first storage device 1200_1. The storage management system 1100 may transmit the set-feature command including the resource allocation map to the first storage device 1200_1.

According to one or more embodiments, the resource change information may include information, such as types and sizes of the resources to be changed. For example, the resource change information may further include information about the size of the management data cache area and information about an increased size of the management data cache area.

The first storage device 1200_1 may receive the resource change information. The first storage device 1200_1 may reallocate the resource in response to the resource change information. Alternatively, the first storage device 1200_1 may reallocate the resource in response to the set-feature command including the resource allocation map. The first storage device 1200_1 may allocate the CXL memory device 1400_2 rather than the memory 1220 to the third virtual function VF3. Thus, the first storage device 1200_1 may move the third mapping table MT3 stored in the memory 1220 to the CXL memory device 1400_2. The first storage device 1200_1 may store the third mapping table MT3 in the CXL memory device 1400_2.

The first storage device 1200_1 may increase the size of the fourth area A4. Because the third mapping table MT3 may be moved from the memory 1220 to the CXL memory device 1400_2, the first storage device 1200_1 may remove the third area A3. The first storage device 1200_1 may increase the size of the fourth area A4 by the same size as the size of the removed third area A3. That is, the first storage device 1200_1 may increase the size of the management data cache area. Thus, the memory 1220 may include the first area A1, the second area A2, the fourth area A4, and the fifth area A5. The memory 1220 may not include the third area A3. The size of the fourth area A4 may increase.

According to one or more embodiments, after moving the third mapping table of the third virtual function corresponding to a low SLA level to the external memory resource, the first storage device 1200_1 may increase the size of the fourth area A4. Thus, the first storage device 1200_1 may not instantly process a management operation, such as garbage collection. The first storage device 1200_1 may have the sufficient memory resource for the management operation, and thus, the first storage device 1200_1 may perform the garbage collection or the management operation having sufficient time. Thus, performance deterioration due to the management operation, such as garbage collection, may be minimized.

As described above, the storage server 1002 may perform the resource reallocation operation. The marginal resource in the storage server 1002 may be efficiently used, so that the memory resource may be additionally allocated to the first virtual function or the second virtual function corresponding to a high SLA level. Thus, SLA violation may be prevented and service quality may be improved.

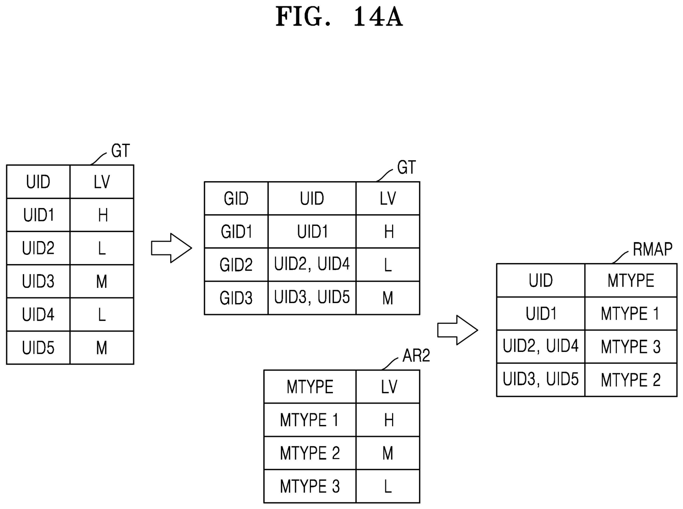

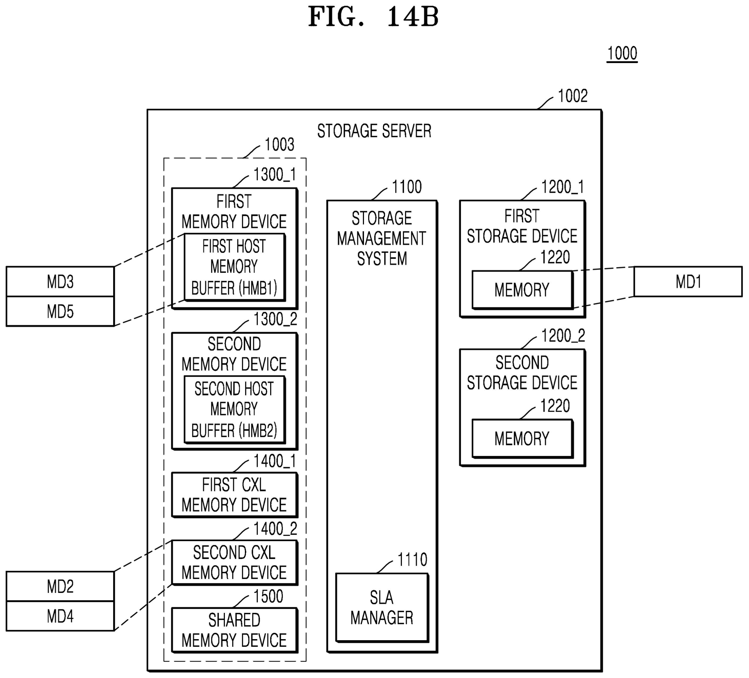

FIGS. 14A and 14B are diagrams for describing an operation of the storage server 1002 of FIG. 1.

Referring to FIGS. 1, 14A, and 14B, the storage management system 1100 may group the plurality of virtual machines (or the plurality of virtual functions) and may allocate the same or substantially the same memory resource to an identical group. Hereinafter, it is assumed that first to fifth virtual machines operate on the client server 1001.

The storage server 1002 may group the virtual machines, based on the SLA information. The storage server 1002 may group the virtual machines having substantially the same SLA information. The storage server 1002 may receive the SLA information from each of the first to fifth virtual machines. The storage server 1002 may generate an analysis result, based on the SLA information and the attribute information.

For example, a first analysis result AR1 may include a first entry including a first user identifier UID1 corresponding to the first virtual machine and a first level H, a second entry including a second user identifier UID2 corresponding to the second virtual machine and a third level L, a third entry including a third user identifier UID3 corresponding to the third virtual machine and a second level M, a fourth entry including a fourth user identifier UID4 corresponding to the fourth virtual machine and the third level L, and a fifth entry including a fifth user identifier UID5 corresponding to the fifth virtual machine and the second level M.

The resource allocator 1112 may group the virtual machines, based on the first analysis result AR1. The storage server 1002 may group the virtual machines having the same level into an identical group. For example, the storage server 1002 may set the first virtual machine into a first group, the second virtual machine and the fourth virtual machine into a second group, and the third virtual machine and the fifth virtual machine into a third group.

According to one or more embodiments, the resource allocator 1112 may generate a group table GT. For example, the group table GT may include an entry including a first group identifier GID1, the first user identifier UID1 corresponding to the first virtual machine, and the first level H, an entry including a second group identifier GID2, the second user identifier UID2 corresponding to the second virtual machine, the fourth user identifier UID4 corresponding to the fourth virtual machine, and the third level L, and an entry including a third group identifier GID3, the third user identifier UID3 corresponding to the third virtual machine, the fifth user identifier UID5 corresponding to the fifth virtual machine, and the second level M.

According to one or more embodiments, the storage server 1002 may generate the resource allocation map RMAP, based on the group table GT and the analysis results AR1 and AR2. For example, the resource allocation map RMAP may include mapping information between the first user identifier UID1 and a first memory type MTYPE1, mapping information between the second user identifier UID2 and the fourth user identifier UID4 and a third memory type MTYPE3, and mapping information between the third user identifier UID3 and the fifth user identifier UID5 and a second memory type MTYPE2.

The storage server 1002 may generate the resource change information, based on the resource allocation map. For example, the resource change information may include the resource allocation map. The storage server 1002 may allocate, based on the resource change information, the memory resource to store metadata and data of the first storage device 1200_1, to each of a plurality of virtual functions corresponding to the plurality of virtual machines, respectively. Because the first user identifier UID1 may correspond to the first memory type MTYPE1 in the resource change information, the storage server 1002 may store a first mapping table corresponding to a first virtual function in the memory 1220. Because the second user identifier UID2 and the fourth user identifier UID4 may correspond to the third memory type MTYPE3 in the resource change information, the storage server 1002 may store a second mapping table corresponding to a second virtual function and a fourth mapping table corresponding to a fourth virtual function in the CXL memory device 1400_2. Because the third user identifier UID3 and the fifth user identifier UID5 may correspond to the second memory type MTYPE2 in the resource change information, the storage server 1002 may store a third mapping table corresponding to a third virtual function and a fifth mapping table corresponding to a fifth virtual function in the first host memory buffer HMB1.

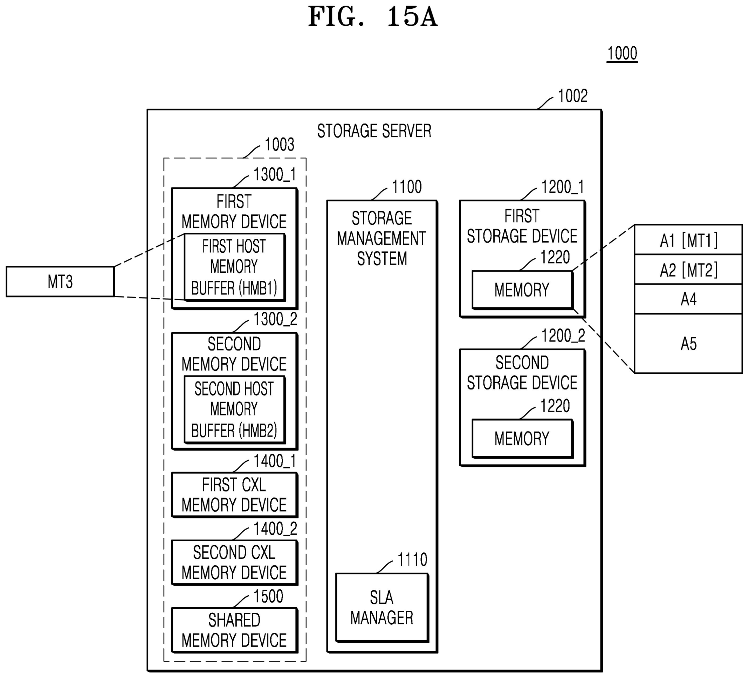

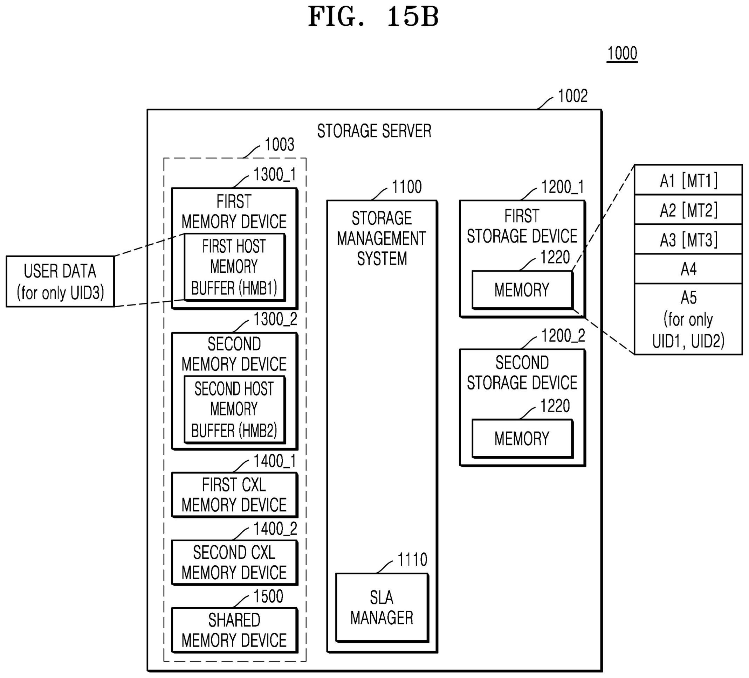

FIGS. 15A and 15B are diagrams for describing an operation of the storage server 1002 of FIG. 1.

Referring to FIGS. 1, 15A, and 15B, the SLA manager 1110 may provide high performance to a first virtual machine and a second virtual machine, which require an SLA of the high specification, and may provide low performance to a third virtual machine, which requires an SLA of the low specification. According to one or more embodiments, the first storage device 1200_1 may store a third mapping table corresponding to the third virtual function in the first host memory buffer HMB1. The memory 1220 may include a first area A1, a second area A2, a fourth area A4, and a fifth area A5. The first storage device 1200_1 may store a first mapping table corresponding to the first virtual function in the first area A1, a second mapping table corresponding to the second virtual function in the second area A2, data required for a management operation in the fourth area A4, and user data of an input and output operation (for example, a read or write operation) in the fifth area A5. As described in FIG. 13A, the first storage device 1200_1 may store the third mapping table in the memory 1220. However, in order to increase the size of the fifth area A5, the first storage device 1200_1 may store the third mapping table in the first host memory buffer HMB1. The first storage device 1200_1 may increase the size of the fifth area A5 by the same size as the third area A3. By increasing the size of the user data cache area, the first storage device 1200_1 may provide high performance to the first virtual machine and the second virtual machine.

According to one or more embodiments, the first storage device 1200_1 may store data, rather than metadata, of the third virtual function, in the first host memory buffer HMB1. The first storage device 1200_1 may use an external memory resource as a data cache of the third virtual function. The first storage device 1200_1 may store the data of an input and output request corresponding to the third virtual function in the first host memory buffer HMB1, rather than the memory 1220. The memory 1220 may include the first to fifth areas A1 to A5. The first storage device 1200_1 may store a first mapping table MT1 in the first area A1, a second mapping table MT2 in the second area A2, a third mapping table MT3 in the third area A3, data required for a management operation in the fourth area A4, and user data of an input and output operation in the fifth area A5. However, unlike FIG. 15A, the first storage device 1200_1 may store only the user data corresponding to the first virtual function and the second virtual function in the fifth area A5. The first storage device 1200_1 may not store the user data corresponding to the third virtual function in the fifth area A5. The first storage device 1200_1 may store only the user data corresponding to the first user identifier UID1 or the second user identifier UID2 included in a read command or a write command in the fifth area A5. The first storage device 1200_1 may store the user data corresponding to the third user identifier UID3 included in the read command or the write command in the first host memory buffer HMB1.

Rather than increasing the size of the fifth area A5, the first storage device 1200_1 may limit user identifiers which may use the fifth area A5, and thus, may provide improved performance to the first virtual machine and the second virtual machine. That is, rather than changing the storage location of the third mapping table MT3 (or the third metadata), the first storage device 1200_1 may store the user data corresponding to the third virtual function in the external memory resource.

The first storage device 1200_1 may increase the size of the fifth area A5 for the first virtual function or the second virtual function, which require the high SLA level. The first storage device 1200_1 may increase the data cache area of the first virtual function or the second virtual function. The first storage device 1200_1 may increase the flush cycle of the data cache area. When the workload characteristic with respect to the first virtual machine has frequent access to hot data and when the flush cycle is short, data stored in the nonvolatile memory device 1230 may be repeatedly invalidated. However, by increasing the flush cycle, the first storage device 1200_1 may change the value of data existing in the data cache area before the data is stored in the nonvolatile memory device 1230. Thus, performance deterioration may be prevented.

As described above, the first storage device 1200_1 may allocate the memory resource to each virtual function and adjust the allocation of the memory resource. The first storage device 1200_1 may allocate the memory resource according to the type of metadata or data stored in the memory resource and may adjust the allocation of the memory resource.

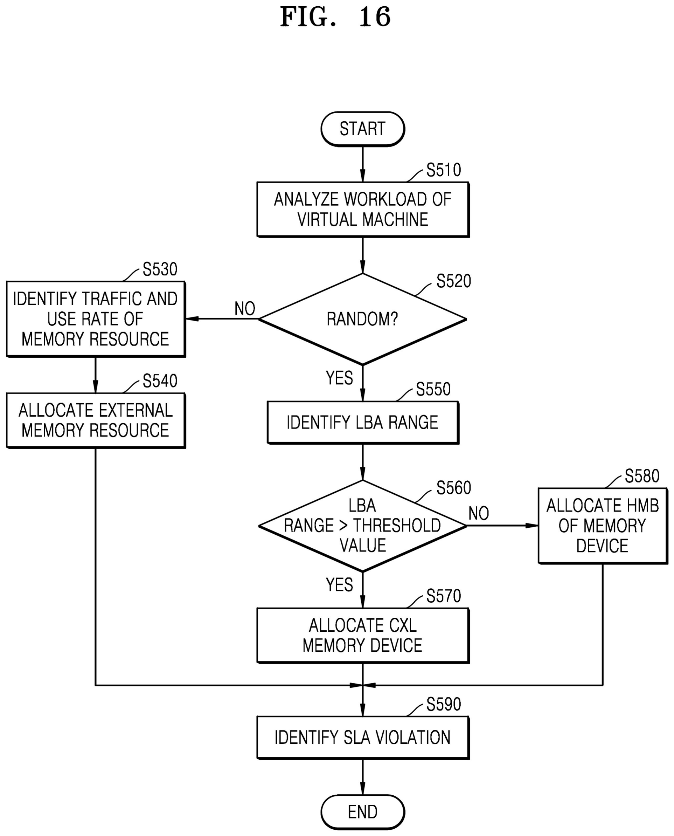

FIG. 16 is a flowchart of an example of an operating method of the storage server 1002 of FIG. 1.

Referring to FIGS. 1 and 16, the storage server 1002 may allocate the external memory resource, based on the workload characteristic. For example, the storage server 1002 may select the external memory resource according to the workload.

In operation S510, the storage server 1002 may analyze the workload of a virtual machine. For example, the storage server 1002 may monitor inputs and outputs between a plurality of virtual machines and the storage device and may extract the workload characteristic. The storage server 1002 may determine the workload as a sequential pattern or a random pattern. According to one or more embodiments, the workload characteristic may indicate an input and output pattern. The workload characteristic may include a sequential pattern or a random pattern. For example, the storage server 1002 may determine the workload characteristic of a first virtual machine as the sequential pattern. The storage server 1002 may determine the workload characteristic of a second virtual machine as the random pattern.

In operation S520, the storage server 1002 may determine whether or not the workload characteristic corresponds to the random pattern. When the workload characteristic is determined to be a random pattern, the storage server 1002 may perform operations S550 to S580, and when the workload characteristic is determined to be a sequential pattern, rather than a random pattern, the storage server 1002 may perform operations S530 and S540.

In operation S530, the storage server 1002 may identify the traffic or the use rate of the external memory resource. When the workload characteristic is determined to be a sequential pattern, the storage server 1002 may obtain state information of the external memory resource. The storage server 1002 may receive the state information from the external memory resource.

In operation S540, the storage server 1002 may allocate the external memory resource to a virtual function corresponding to a virtual machine having the workload characteristic that is the sequential pattern. For example, because the workload characteristic of the first virtual machine is determined to be the sequential pattern, the storage server 1002 may allocate the external memory resource to a first virtual function corresponding to the first virtual machine, based on the state information. The storage server 1002 may allocate the resource to the first virtual function, based on the traffic and the use rate of the external memory resource. After operation S540, the storage server 1002 may perform operation S590.

In operation S550, the storage server 1002 may identify a logical block address (LBA) range. The storage server 1002 may determine an address range of a virtual function corresponding to a virtual machine having the workload characteristic of the random pattern. For example, because the workload characteristic of the second virtual machine is determined to be the random pattern, the storage server 1002 may determine the address range of a second virtual function corresponding to the second virtual machine, based on the state information.

In operation S560, the storage server 1002 may determine whether or not the determined address range exceeds a threshold value. When the address range exceeds the threshold value, the storage server 1002 may perform operation S570, and when the address range is equal to or less than the threshold value, the storage server 1002 may perform operation S580. The threshold value may be predetermined.

In operation S570, the storage server 1002 may allocate the first and second CXL memory devices 1400_1 and 1400_2 to the virtual function. For example, when the address range of the second virtual function corresponding to the second virtual machine exceeds the threshold value, the storage server 1002 may allocate the first and second CXL memory devices 1400_1 and 1400_2 to the second virtual function. When the size of an address area is large, the storage server 1002 may allocate an area of the first and second CXL memory devices 1400_1 and 1400_2, which may be accessed in byte units. The storage server 1002 may allocate an area of the first and second CXL memory devices 1400_1 and 1400_2 of the external memory resources to the virtual function having the large address area, and thus, may optimize the access to the external memory and the performance.

In operation S580, the storage server 1002 may allocate the first and second host memory buffers HMB1 and HMB2 to the virtual function. For example, when the address range of the second virtual function corresponding to the second virtual machine is equal to or less than the threshold value, the storage server 1002 may allocate the first and second host memory buffers HMB1 and HMB2 to the second virtual function. In operation S590, the storage server 1002 may identify whether or not there is an SLA violation. When there is an SLA violation, the storage server 1002 may perform a resource reallocation operation. When there is an SLA violation, the storage server 1002 may perform operations S510 to S570 again.

As described above, the storage server 1002 may select the external memory resource according to the workload. The storage server 1002 may determine the workload of the virtual machine, such as the sequential pattern or the random pattern, and may determine the external memory resource according to the workload of the virtual machine.

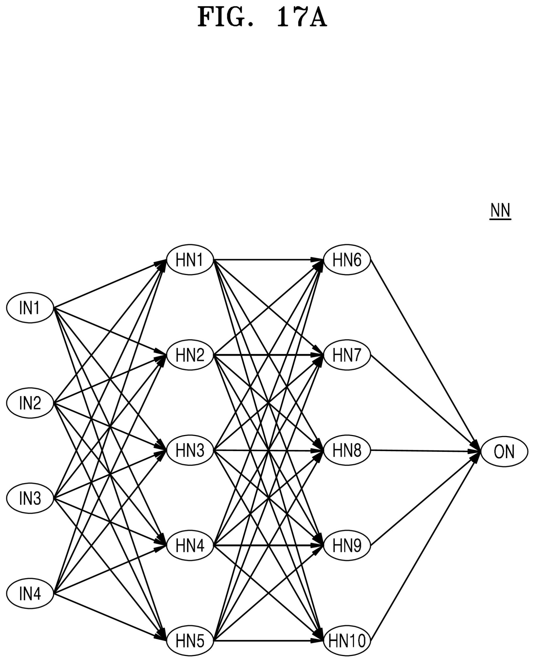

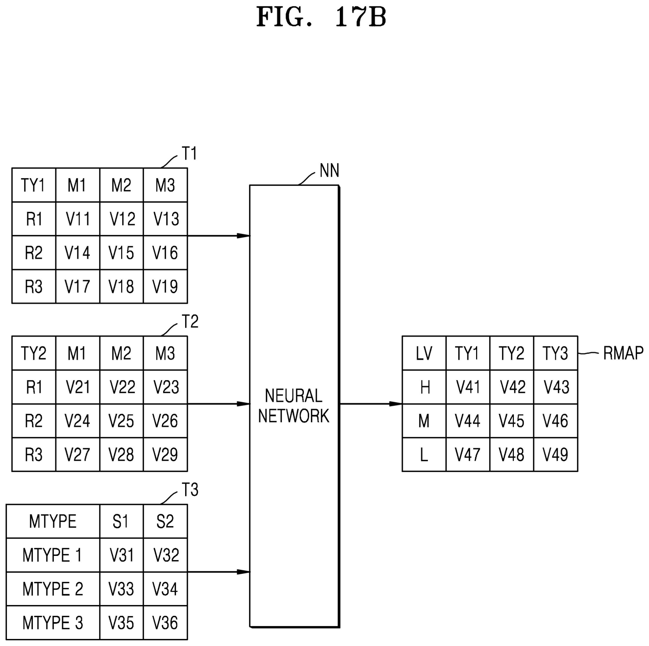

FIG. 17A shows an NN which may be used as an example of a machine learning model. FIG. 17B is a diagram showing an example of a method of generating a resource allocation map through an NN.

Referring to FIGS. 1, 17A, and 17B, the SLA manager 1110 may further include an NN. For example, the NN may include various derivatives, such as an artificial neural network (ANN), a convolution neural network (CNN), a recursive neural network (RNN), etc.

Referring to FIG. 17A, the NN may include first to fourth input nodes IN1 to IN4, first to tenth hidden nodes HN1 to HN10, and an output node ON. The number of input nodes, the number of hidden nodes, and the number of output nodes may be predetermined when the NN is formed.

The first to fourth input nodes IN1 to IN4 may form an input layer. The first to fifth hidden nodes HN1 to HN5 may form a first hidden layer. The sixth to tenth hidden nodes HN6 to HN10 may form a second hidden layer. The output node ON may form an output layer. The number of hidden layers may be predetermined when the NN is formed.

Input data for learning or inference may be input to the first to fourth input nodes IN1 to IN4. The value of each input node may be transmitted to the first to fifth hidden nodes HN1 to HN5 of the first hidden layer through branches (or synapses) illustrated. Each of the branches (or the synapses) may be designated to have a corresponding synapse value or weight. The value of each input node may be calculated with (for example, multiplied by) the synapse value or weight of the corresponding branch (or synapse) and may be transmitted to the first hidden layer.

The values input to the first to fifth hidden nodes HN1 to HN5, respectively, may be calculated with the weights (or the synapse values) and may be transmitted to the sixth to tenth hidden nodes HN6 to HN10 of the second hidden layer. The inputs of the sixth to tenth hidden nodes HN6 to HN10 may be calculated with the weights (or the synapse values) and may be transmitted to the output node ON. The value of the output node ON (or output data) may indicate a result of learning or inference.

The input data of the NN may include at least one of the SLA information, the attribute information, the state information, and the workload characteristic. The output data of the NN may include the resource allocation map. The input data of the NN may include historical resource allocation maps stored in the resource history storage 1115.

For example, the input data may include first to third tables T1 to T3. The first table T1 may include values of metrics of the attribute information according to the rates R1 to R3 by which data of a first type TY1 uses the internal memory resource. The second table T2 may include values of metrics of the attribute information according to the rates R1 to R3 by which data of a second type TY2 uses the internal memory resource. For example, the data of the first type TY1 may indicate a mapping table, and the data of the second type TY2 may indicate data with respect to a management operation. For example, the first type TY1 may correspond to the first area A1 of FIG. 15B, and the second type TY2 may correspond to the fourth area A4.

According to one or more embodiments, the attribute information may include a plurality of metrics, that is, first to third metrics M1 to M3. For example, the plurality of metrics may include IOPS, performance (for example, performance per TB), throughput, and QoS (or service quality).

The first table T1 may include a plurality of values V11 to V19. For example, the value V11 may be a value corresponding to the first rate R1 and the first metric M1, and the value V14 may be a value corresponding to the second rate R2 and the first metric M1. The rest values V11 to V19 may be substantially the same as described above, and thus, their detailed descriptions are omitted.

The second table T2 may include a plurality of values V21 to V29. For example, the value V21 may be a value corresponding to the first rate R1 and the first metric M1, and the value V24 may be a value corresponding to the second rate R2 and the first metric M1. The rest values V21 to V29 may be substantially the same as described above, and thus, their detailed descriptions are omitted.

The third table T3 may include state information of a memory resource. For example, the third table T3 may include values of sub-information of state information of the first to third memory types MTYPE1 to MTYPE3. The state information may include a plurality of pieces of sub-information, that is, first sub-information S1 and second sub-information S2. For example, the first sub-information S1 may correspond to the response time, and the second sub-information S2 may correspond to the frequency. The first memory type MTYPE1 may correspond to the memory 1220, the second memory type MTYPE2 may correspond to the first and second host memory buffers HMB1 and HMB2, and the third memory type MTYPE3 may correspond to the first and second CXL memory devices 1400_1 and 1400_2.

The third table T3 may include a plurality of values V31 to V36. For example, the value V31 may be a value corresponding to the first memory type MTYPE1 and the first sub-information S1, and the value V33 may be a value corresponding to the second memory type MTYPE2 and the first sub-information S1. The rest values V31 to V36 may be substantially the same as described above, and thus, their detailed descriptions are omitted.

The NN may receive the first to third tables T1 to T3 as input data and may output the resource allocation map RMAP as output data. According to one or more embodiments, the resource allocation map RMAP may include the level of the SLA information and the value of the rate by which each data type TY1, TY2, or TY3 uses the internal memory resource. For example, the level of the SLA information may include the first to third levels H, M, and L. The first level H may correspond to high performance, the second level M may correspond to intermediate performance, and the third level L may correspond to low performance. For example, the first type TY1 may correspond to a mapping table, the second type TY2 may correspond to data related with a management operation, and the third type TY3 may correspond to user data of an input and output operation. The resource allocation map RMAP may include a plurality of values V41 to V49. For example, the value V41 may be a value corresponding to the first level H and the first type TY1, and the value V44 may be a value corresponding to the second level M and the first type TY1. The rest values V41 to V49 may be substantially the same as described above, and thus, their detailed descriptions are omitted. As described above, the storage server 1002 may optimize the resource allocation by using the machine learning model or the NN.

As described above, the machine learning model (or the NN) may generate an optimal resource allocation map, based on the input data including the SLA information, the attribute information, and the state information of the memory resource. The storage server 1002 may allocate the internal memory resource or the external memory resource to each of the plurality of virtual functions, based on the resource allocation map.

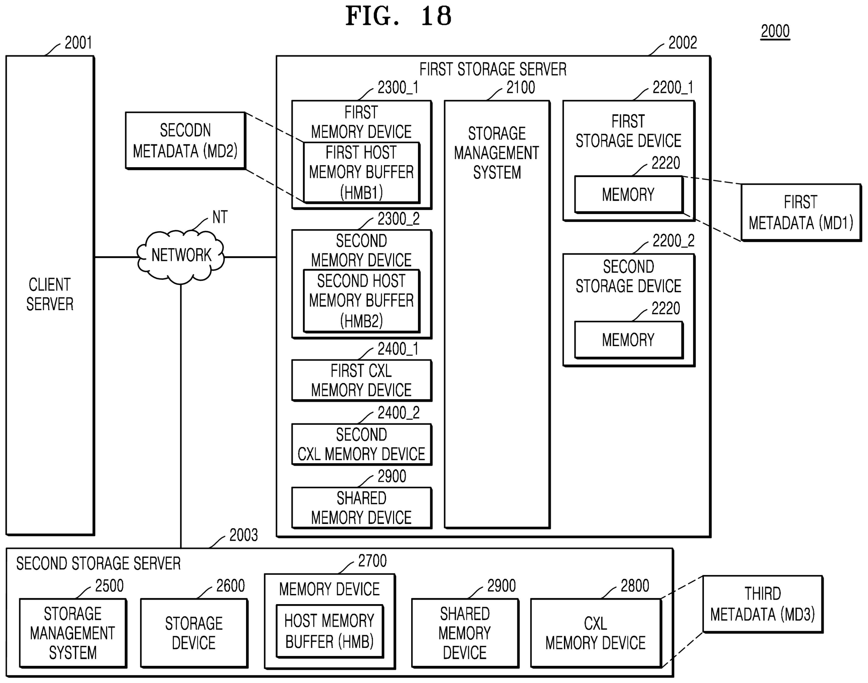

FIG. 18 is a block diagram of the server system 2000 according to one or more embodiments.

Referring to FIGS. 1 and 18, the server system 2000 may include a client server 2001, a first storage server 2002, a second storage server 2003, and a network NT. The client server 2001, the first storage server 2002, and the second storage server 2003 may communicate with one another through the network NT. Even if not explicitly described below, the first storage server 2002 and the second storage server 2003 may correspond to above storage server 1002 and have some or all of the features of the above storage server 1002.

The first storage server 2002 may include a storage management system 2100, first and second storage devices 2200_1 and 2200_2, first and second memory devices 2300_1 and 2300_2, first and second CXL memory devices 2400_1 and 2400_2, and a shared memory device 2900. The second storage server 2003 may include a storage management system 2500, a storage device 2600, a memory device 2700, a CXL memory device 2800, and the shared memory device 2900.

The first and second storage devices 2200_1 and 2200_2 may use the CXL memory device 2800 of the second storage server 2003 through the network NT. The first and second storage devices 2200_1 and 2200_2 may access the CXL memory device 2800 of the second storage server 2003 through NVMe over fabrics (NVMe-oF). The first and second storage devices 2200_1 and 2200_2 may communicate with the CXL memory device 2800 without intervention of the storage management system 2100. The first and second storage devices 2200_1 and 2200_2 may store a portion of metadata in the CXL memory device 2800.

The storage management system 2100 may perform a resource allocation operation, based on SLA information and attribute information. The storage management system 2100 may receive first to third SLA information. The first SLA information may correspond to a first virtual machine, the second SLA information may correspond to a second virtual machine, and the third SLA information may correspond to a third virtual machine. The storage management system 2100 may assess the first SLA information as a first level H, the second SLA information as a second level M, and the third SLA information as a third level L.

The storage management system 2100 may allocate a memory 2220 to a first virtual function corresponding to the first virtual machine, based on the first SLA information of the first level H. The storage management system 2100 may allocate the first host memory buffer HMB1 to a second virtual function corresponding to the second virtual machine, based on the second SLA information of the second level M. The storage management system 2100 may allocate the CXL memory device 2800 to a third virtual function corresponding to the third virtual machine, based on the third SLA information of the third level L.

The second storage device 2200_2 may store the first metadata MD1 corresponding to the first virtual function in the memory 2220. The second storage device 2200_2 may store the second metadata MD2 corresponding to the second virtual function in the first host memory buffer HMB1. The second storage device 2200_2 may store the third metadata MD3 corresponding to the third virtual function in the CXL memory device 2800.

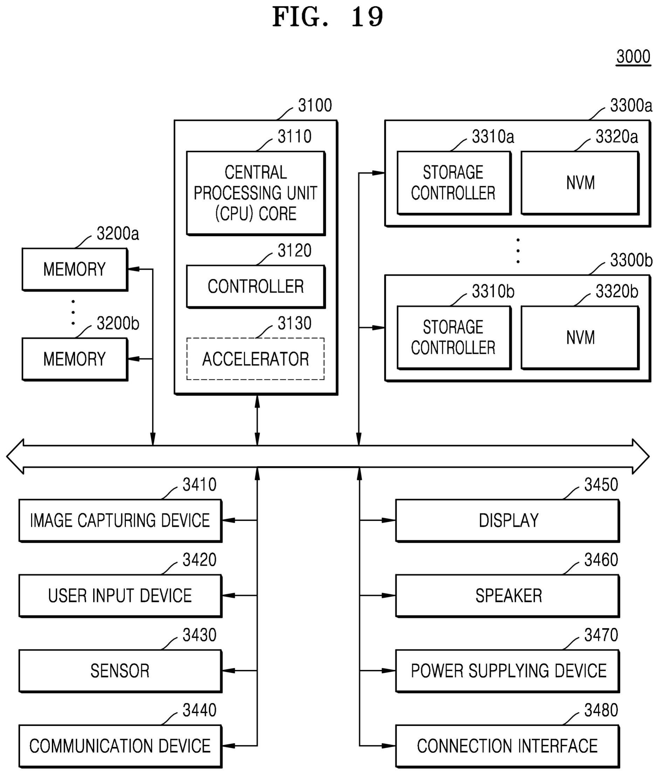

FIG. 19 is a diagram of a system 3000 to which a storage device is applied, according to one or more embodiments. The system 3000 of FIG. 19 may basically be a mobile system, such as a portable communication terminal (e.g., a mobile phone), a smartphone, a tablet personal computer (PC), a wearable device, a healthcare device, or an Internet of things (IOT) device. However, the system 3000 of FIG. 19 is not necessarily limited to the mobile system and may be a PC, a laptop computer, a server, a media player, or an automotive device (e.g., a navigation device).

Referring to FIG. 19, the system 3000 may include a main processor 3100, memories (e.g., 3200a and 3200b), and storage devices (e.g., 3300a and 3300b). In addition, the system 3000 may include at least one of an image capturing device 3410, a user input device 3420, a sensor 3430, a communication device 3440, a display 3450, a speaker 3460, a power supplying device 3470, and a connecting interface 3480.

The main processor 3100 may control all operations of the system 3000, more specifically, operations of other components included in the system 3000. The main processor 3100 may be implemented as a general-purpose processor, a dedicated processor, or an application processor.

The main processor 3100 may include at least one CPU core 3110 and further include a controller 3120 configured to control the memories 3200a and 3200b and/or the storage devices 3300a and 3300b. In one or more embodiments, the main processor 3100 may further include an accelerator 3130, which is a dedicated circuit for a high-speed data operation, such as an artificial intelligence (AI) data operation. The accelerator 3130 may include a graphics processing unit (GPU), a neural processing unit (NPU) and/or a data processing unit (DPU) and be implemented as a chip that is physically separate from the other components of the main processor 3100.

The memories 3200a and 3200b may be used as main memory devices of the system 3000. Although each of the memories 3200a and 3200b may include a volatile memory, such as SRAM and/or DRAM, each of the memories 3200a and 3200b may include non-volatile memory, such as a flash memory, PRAM and/or RRAM. The memories 3200a and 3200b may be implemented in the same package as the main processor 3100.

The storage devices 3300a and 3300b may serve as non-volatile storage devices configured to store data regardless of whether power is supplied thereto, and have larger storage capacity than the memories 3200a and 3200b. The storage devices 3300a and 3300b may respectively include storage controllers (STRG CTRL) 3310a and 3310b and NVM (Non-Volatile Memory)s 3320a and 3320b configured to store data via the control of the storage controllers 3310a and 3310b. Although the NVMs 3320a and 3320b may include flash memories having a two-dimensional (2D) structure or a three-dimensional (3D) V-NAND structure, the NVMs 3320a and 3320b may include other types of NVMs, such as PRAM and/or RRAM.

The storage devices 3300a and 3300b may be physically separated from the main processor 3100 and included in the system 3000 or implemented in the same package as the main processor 3100. In addition, the storage devices 3300a and 3300b may have types of solid-state devices (SSDs) or memory cards and be removably combined with other components of the system 3000 through an interface, such as the connecting interface 3480 that will be described below. The storage devices 3300a and 3300b may be devices to which a standard protocol, such as a UFS, an embedded multi-media card (eMMC), or an NVMe, is applied, without being limited thereto.

The image capturing device 3410 may capture still images or moving images. The image capturing device 3410 may include a camera, a camcorder, and/or a webcam.

The user input device 3420 may receive various types of data input by a user of the system 3000 and include a touch pad, a keypad, a keyboard, a mouse, and/or a microphone.

The sensor 3430 may detect various types of physical quantities, which may be obtained from the outside of the system 3000, and convert the detected physical quantities into electric signals. The sensor 3430 may include a temperature sensor, a pressure sensor, an illuminance sensor, a position sensor, an acceleration sensor, a biosensor, and/or a gyroscope sensor.

The communication device 3440 may transmit and receive signals between other devices outside the system 3000 according to various communication protocols. The communication device 3440 may include an antenna, a transceiver, and/or a modem.

The display 3450 and the speaker 3460 may serve as output devices configured to respectively output visual information and auditory information to the user of the system 3000.

The power supplying device 3470 may appropriately convert power supplied from a battery embedded in the system 3000 and/or an external power source, and supply the converted power to each of components of the system 3000.

The connecting interface 3480 may provide connection between the system 3000 and an external device, which is connected to the system 3000 and capable of transmitting and receiving data to and from the system 3000. The connecting interface 3480 may be implemented by using various interface schemes, such as ATA, SATA, e-SATA, SCSI, SAS, PCI, PCle, NVMe, IEEE 1394, a USB interface, a secure digital (SD) card interface, a multi-media card (MMC) interface, an eMMC interface, a UFS interface, an embedded UFS (eUFS) interface, and a compact flash (CF) card interface.

According to one or more embodiments, the main processor 3100 may be the storage management system 1100 described with reference to FIGS. 1 to 18. The storage devices 3300a and 3300b may be the first and second storage devices 1200_1 and 1200_2 described with reference to FIGS. 1 to 18. The memories 3200a and 3200b may be the first and second memory devices 1300_1 and 1300_2 or the first and second CXL memory devices 1400_1 and 1400_2 described with reference to FIGS. 1 to 18. The system 3000 may perform a resource allocation operation and a resource reallocation operation, based on the method described with reference to FIGS. 1 to 18.

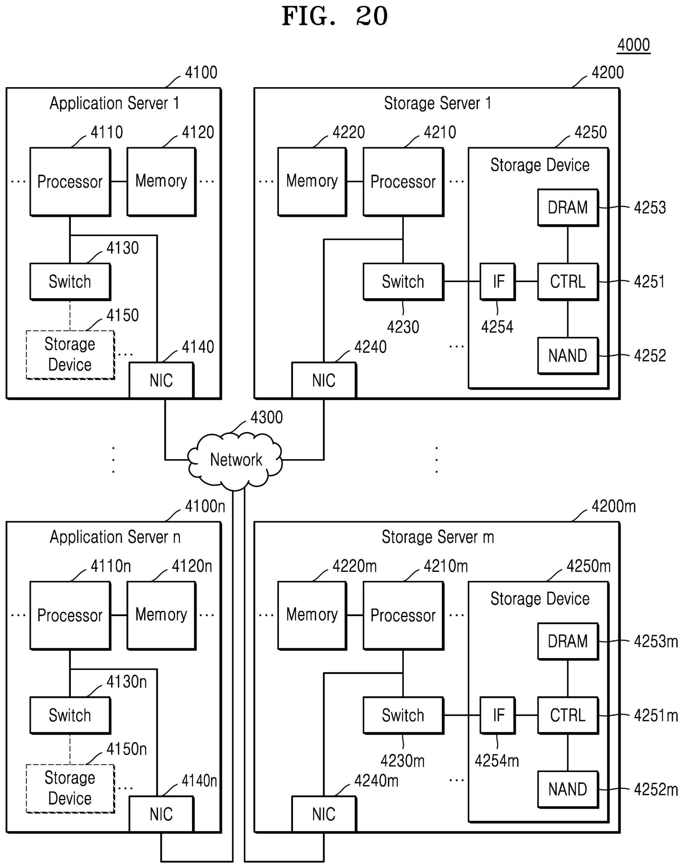

FIG. 20 is a diagram of a data center 4000 to which a memory device is applied, according to one or more embodiments.

Referring to FIG. 20, the data center 4000 may be a facility that collects various types of pieces of data and provides services and be referred to as a data storage center. The data center 4000 may be a system for operating a search engine and a database, and may be a computing system used by companies, such as banks, or government agencies. The data center 4000 may include application servers 4100 to 4100n and storage servers 4200 to 4200m. Even if not explicitly described below, each of the storage servers 4200 to 4200m may have some or all of the features of the above storage server 1002. The number of application servers 4100 to 4100n and the number of storage servers 4200 to 4200m may be variously selected according to embodiments. The number of application servers 4100 to 4100n may be different from the number of storage servers 4200 to 4200m. For example, the storage servers 4200 to 4200m may include switches 4230 to 4230m, network InterConnects (NICs) 4240 to 4240m, DRAMs 4253 to 4253m and controllers (CTRLs) 4251 to 4251m, respectively.

The application server 4100 or the storage server 4200 may include at least one of processors 4110 and 4210 and memories 4120 and 4220. The storage server 4200 will now be described as an example. The processor 4210 may control all operations of the storage server 4200, access the memory 4220, and execute instructions and/or data loaded in the memory 4220. The memory 4220 may be a double-data-rate synchronous DRAM (DDR SDRAM), a high-bandwidth memory (HBM), a hybrid memory cube (HMC), a dual in-line memory module (DIMM), Optane DIMM, and/or a non-volatile DIMM (NVMDIMM). In one or more embodiments, the numbers of processors 4210 and memories 4220 included in the storage server 4200 may be variously selected. In one or more embodiments, the processor 4210 and the memory 4220 may provide a processor-memory pair. In one or more embodiments, the number of processors 4210 may be different from the number of memories 4220. The processor 4210 may include a single-core processor or a multi-core processor. The above description of the storage server 4200 may be similarly applied to the application server 4100. In one or more embodiments, the application server 4100 may not include a storage device 4150. The storage server 4200 may include at least one storage device 4250. The number of storage devices 4250 included in the storage server 4200 may be variously selected according to embodiments.

The application servers 4100 to 4100n may communicate with the storage servers 4200 to 4200m through a network 4300. The network 4300 may be implemented by using a fiber channel (FC) or Ethernet. In this case, the FC may be a medium used for relatively high-speed data transmission and use an optical switch with high performance and high availability. The storage servers 4200 to 4200m may be provided as file storages, block storages, or object storages according to an access method of the network 4300.

In one or more embodiments, the network 4300 may be a storage-dedicated network, such as a storage area network (SAN). For example, the SAN may be an FC-SAN, which uses an FC network and is implemented according to an FC protocol (FCP). As another example, the SAN may be an Internet protocol (IP)-SAN, which uses a transmission control protocol (TCP)/IP network and is implemented according to a SCSI over TCP/IP or Internet SCSI (iSCSI) protocol. In another embodiment, the network 4300 may be a general network, such as a TCP/IP network. For example, the network 4300 may be implemented according to a protocol, such as FC over Ethernet (FCoE), network attached storage (NAS), and NVMe-oF.

Hereinafter, the application server 4100 and the storage server 4200 will mainly be described. A description of the application server 4100 may be applied to another application server 4100n, and a description of the storage server 4200 may be applied to another storage server 4200m.

The application server 4100 may store data, which is requested by a user or a client to be stored, in one of the storage servers 4200 to 4200m through the network 4300. Also, the application server 4100 may obtain data, which is requested by the user or the client to be read, from one of the storage servers 4200 to 4200m through the network 4300. For example, the application server 4100 may be implemented as a web server or a database management system (DBMS).

The application server 4100 may access a memory 4120n or a storage device 4150n, which is included in another application server 4100n, through the network 4300. Alternatively, the application server 4100 may access memories 4220 to 4220m or storage devices 4250 to 4250m, which are included in the storage servers 4200 to 4200m, through the network 4300. Thus, the application server 4100 may perform various operations on data stored in application servers 4100 to 4100n and/or the storage servers 4200 to 4200m. For example, the application server 4100 may execute an instruction for moving or copying data between the application servers 4100 to 4100n and/or the storage servers 4200 to 4200m. In this case, the data may be moved from the storage devices 4250 to 4250m of the storage servers 4200 to 4200m to the memories 4120 to 4120n of the application servers 4100 to 4100n directly or through the memories 4220 to 4220m of the storage servers 4200 to 4200m. The data moved through the network 4300 may be data encrypted for security or privacy.

The storage server 4200 will now be described as an example. An interface 4254 may provide physical connection between a processor 4210 and a controller 4251 and a physical connection between a network interface card (NIC) 4240 and the controller 4251. For example, the interface 4254 may be implemented using a direct attached storage (DAS) scheme in which the storage device 4250 is directly connected with a dedicated cable. For example, the interface 4254 may be implemented by using various interface schemes, such as ATA, SATA, e-SATA, an SCSI, SAS, PCI, PCle, NVMe, IEEE 1394, a USB interface, an SD card interface, an MMC interface, an eMMC interface, a UFS interface, an eUFS interface, and/or a CF card interface.

The storage server 4200 may further include a switch 4230 and the NIC (Network InterConnect) 4240. The switch 4230 may selectively connect the processor 4210 to the storage device 4250 or selectively connect the NIC 4240 to the storage device 4250 via the control of the processor 4210. Similarly, application servers 4100 to 4100n may include switches 4130 to 4130n that may selectively connect the processors 4110 to 4110n to the storage devices 4150 to 4150n, or selectively connect the NICs 4140 to 4140n to the storage devices 4150 to 4150n, via the control of the processors 4110 to 4110n.

In one or more embodiments, the NIC 4240 may include a network interface card and a network adaptor. The NIC 4240 may be connected to the network 4300 by a wired interface, a wireless interface, a Bluetooth interface, or an optical interface. The NIC 4240 may include an internal memory, a digital signal processor (DSP), and a host bus interface and be connected to the processor 4210 and/or the switch 4230 through the host bus interface. The host bus interface may be implemented as one of the above-described examples of the interface 4254. In one or more embodiments, the NIC 4240 may be integrated with at least one of the processor 4210, the switch 4230, and the storage device 4250.

In the storage servers 4200 to 4200m or the application servers 4100 to 4100n, a processor may transmit a command to storage devices 4150 to 4150n and 4250 to 4250m or the memories 4120 to 4120n and 4220 to 4220m and program or read data. In this case, the data may be data of which an error is corrected by an ECC engine. The data may be data on which a data bus inversion (DBI) operation or a data masking (DM) operation is performed, and may include cyclic redundancy code (CRC) information. The data may be data encrypted for security or privacy.

Storage devices 4150 to 4150n and 4250 to 4250m may transmit a control signal and a command/address signal to NAND flash memory devices 4252 to 4252m in response to a read command received from the processor. Thus, when data is read from the NAND flash memory devices 4252 to 4252m, a read enable (RE) signal may be input as a data output control signal, and thus, the data may be output to a DQ bus. A data strobe signal DQS may be generated using the RE signal. The command and the address signal may be latched in a page buffer depending on a rising edge or falling edge of a write enable (WE) signal.

The controller 4251 may control all operations of the storage device 4250. In one or more embodiments, the controller 4251 may include SRAM. The controller 4251 may write data to the NAND flash memory device 4252 in response to a write command or read data from the NAND flash memory device 4252 in response to a read command. For example, the write command and/or the read command may be provided from the processor 4210 of the storage server 4200, the processor 4210m of another storage server 4200m, or the processors 4110 and 4110n of the application servers 4100 and 4100n. DRAM 4253 may temporarily store (or buffer) data to be written to the NAND flash memory device 4252 or data read from the NAND flash memory device 4252. Also, the DRAM 4253 may store metadata. Here, the metadata may be user data or data generated by the controller 4251 to manage the NAND flash memory device 4252. The storage device 4250 may include a secure element (SE) for security or privacy.

According to one or more embodiments, the storage servers 4200 to 4200m may include the SLA manager 1110 described with reference to FIGS. 1 to 18 or may perform the resource allocation operation and the resource reallocation operation described with reference to FIGS. 1 to 18. The storage servers 4200 to 4200m may dynamically manage the resource, based on the SLA level of each of the plurality of virtual machines. Thus, the performance and the stability of the storage servers 4200 to 4200m may be improved.

As used herein, components such as "processors" or "controllers" may be implemented as a digital signal processor (DSP) processing digital signals, a microprocessor, and a time controller (TCON). However, the disclosure is not limited thereto, and the processor and controller recited herein may include one or more of a central processing unit (CPU), a micro controller unit (MCU), a micro processing unit (MPU), a controller, an application processor (AP), a graphics-processing unit (GPU) or a communication processor (CP), and an advanced reduced instruction set computer (RISC) machines (ARM) processor, or may be defined by the terms. Also, the processors or controllers described herein may be implemented as a system on chip (SoC) having a processing algorithm stored therein or large scale integration (LSI), or in the form of a field programmable gate array (FPGA). The processors or controller recited herein may perform various functions by executing computer executable instructions stored in the memory.

At least one of the components, elements, modules, units, or the like (collectively "components" in this paragraph) represented by a block or an equivalent indication (collectively "block") in the above embodiments including the drawings such as FIGS. 1-4, 10-13B, 14B-15B, and 18-20, for example, server, management system, manager, memory, storage device, buffer, controller, SLA analyzer, resource allocator, SLA monitor, workload analyzer, and resource history storage, or the like, may carry out the above-described function or functions. These blocks may be physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

## Claims

1. A storage server (1002; 2002, 2003; 4200-4200m) comprising:
a storage device (1200_1, 1200_2; 2200_1, 2200_2; 3300a, 3300b) comprising a storage controller (1210; 3310a, 3310b), a nonvolatile memory device (1230; 3320a, 3320b), and a storage device memory (1220; 2220) storing one or more storage device instructions, wherein the storage controller (1210; 3310a, 3310b) is configured to execute the one or more storage device instructions and cause the storage device to provide a virtual function;
a memory device (1300_1, 1300_2; 2300_1, 2300_2) comprising a host memory buffer (HMB1, HMB2) managed by the storage device (1200_1, 1200_2; 2200_1, 2200_2; 3300a, 3300b);
a shared memory device (1500; 2900) configured to communicate with the storage device (1200_1, 1200_2; 2200_1, 2200_2; 3300a, 3300b) and a storage management system (1100; 2100; 3100);
a compute express link, CXL, memory device (1400_1, 1400_2; 2400_1, 2400_2) configured to communicate with the storage device (1200_1, 1200_2; 2200_1, 2200_2; 3300a, 3300b) and the storage management system (1100; 2100; 3100) based on a CXL.mem protocol; and
the storage management system (1100; 2100; 3100) comprising system memory storing one or more system instructions and at least one system processor configured to execute the one or more system instructions, wherein the one or more system instructions, when executed by the at least one system processor, cause the storage management system (1100; 2100; 3100)to:
receive service level agreement, SLA, information from each of a plurality of virtual machines (VM1-VM3);
receive attribute information from the storage device (1200_1, 1200_2; 2200_1, 2200_2; 3300a, 3300b);
analyze the SLA information and the attribute information and generate an analysis result;
allocate, based on the analysis result, an internal memory resource or an external memory resource to the virtual function; and
monitor for an SLA violation of the virtual function,
wherein the internal memory resource includes at least a portion of the storage device memory (1220; 2220), and the external memory resource includes at least a portion of one or more of the CXL memory device (1400_1, 1400_2; 2400_1, 2400_2), the shared memory device (1500; 2900), and the host memory buffer (HMB1, HMB2) of the memory device (1300_1, 1300_2; 2300_1, 2300.2).

2. The storage server of claim 1, wherein metadata corresponding to the virtual function is stored in the internal memory resource and the external memory resource.

3. The storage server of claim 1 or 2, wherein the one or more system instructions, when executed by the at least one system processor, further cause the storage management system (1100; 2100; 3100) to generate a resource allocation map comprising a mapping relationship between a user identifier corresponding to the virtual function and an allocated memory resource type.

4. The storage server of any one of claims 1 to 3, wherein the one or more system instructions, when executed by the at least one system processor, further cause the storage management system (1100; 2100; 3100) to:
monitor an input and an output between a virtual machine of the plurality of virtual machines (VM1-VM3) and the storage device (1200_1, 1200_2; 2200_1, 2200_2; 3300a, 3300b);
extract a workload characteristic, and
allocate, based on the analysis result and the workload characteristic, the internal memory resource or the external memory resource to the virtual function.

5. The storage server of any one of claims 1 to 4, wherein the one or more system instructions, when executed by the at least one system processor, cause the storage management system (1100; 2100; 3100) to:
monitor states of the storage device memory (1220; 2220), the memory device, the shared memory device, and the CXL memory device, and generate state information of the internal memory resource and the external memory resource based on the monitoring of the states, and
allocate, based on the analysis result and the state information, the internal memory resource or the external memory resource to the virtual function.

6. The storage server of any one of claims 1 to 5, wherein the system memory stores one or more historical resource allocation maps, and
wherein the one or more system instructions, when executed by the at least one system processor, cause the storage management system (1100; 2100; 3100) to search for a resource allocation map, among the one or more historical resource allocation maps, corresponding to the analysis result.

7. The storage server of any one of claims 1 to 6, wherein the attribute information comprises a number of input or output operations per second, IOPS, performance, throughput, and quality of service, QoS.

8. A method of operating a storage server comprising a storage management system (1100), a storage device (1200_1), a memory device, a shared memory device, and a compute express link, CXL, memory device, the method comprising:
receiving (S110; S401), by the storage management system (1100), service level agreement, SLA, information from each of a plurality of virtual machines (VM1-VM3);
transmitting (S402), by the storage device (1200_1), attribute information of the storage device (1200_1) to the storage management system (1100);
allocating (S150; S407), by the storage management system (1100), based on the SLA information and the attribute information, an internal memory resource or an external memory resource to one or more of a plurality of virtual functions (VF1-VF3); and
monitoring (S170; S411), by the storage management system (1100), for an SLA violation of each of the plurality of virtual functions (VF1-VF3),
wherein the storage device (1200_1) comprises a storage controller (1210), a memory storing one or more storage device instructions, and a nonvolatile memory device (1230),
wherein the storage controller (1210) is configured to execute the one or more storage device instructions and cause the storage device (1200_1) to provide the plurality of virtual functions (VF1-VF3), and
wherein the internal memory resource includes at least a portion of the storage device memory (1220), and the external memory resource includes at least a portion of one or more of a host memory buffer (HMB1) of the memory device, the shared memory device, and the CXL memory device.

9. The method of claim 8, wherein the allocating (S150; S407) the internal memory resource or the external memory resource comprises:
by the storage management system (1100), analyzing (S151) the SLA information and the attribute information and generating an analysis result;
obtaining (S153), by the storage management system (1100), state information of the internal memory resource and the external memory resource;
generating (S155), by the storage management system (1100), based on the analysis result and the state information, a resource allocation map;
transmitting (S157), by the storage management system (1100), resource change information comprising the resource allocation map to the storage device (1200_1); and
by the storage device (1200_1), based on the resource change information, allocating (S159) a memory resource to one or more of the plurality of virtual functions (VF1-VF3) and storing metadata in the one or more allocated memory resources.

10. The method of claim 9, further comprising:
after transmitting (S157) the resource change information to the storage device (1200_1), rebooting the storage server; and
after moving the metadata, causing the storage server to perform a normal operation.

11. The method of any one of claims 8 to 10, wherein the monitoring, (S170) by the storage management system (1100), for an SLA violation of each of the plurality of virtual functions (VF1-VF3) comprises:
detecting (S171), based on a monitoring result, a virtual machine with respect to which there is an SLA violation among the plurality of virtual machines (VM1-VM3); and
performing (172) a resource reallocation operation with respect to a virtual function corresponding to the detected virtual machine among the plurality of virtual functions (VF1-VF3).

12. The method of claim 11, wherein the performing (S172) the resource reallocation operation comprises:
updating (S310) a resource allocation map based on at least one of the SLA information, the attribute information, state information of the internal memory resource, state information of the external memory resource, and a workload characteristic;
transmitting (S330), to the storage device (1200_1), resource change information comprising the updated resource allocation map; and
based on the resource change information, allocating (S370) a memory resource to the virtual function corresponding to the detected virtual machine and storing metadata in the allocated memory resource.

13. The method of any one of claims 8 to 12, wherein the allocating (S150), by the storage management system (1100), based on the SLA information and the attribute information, of the internal memory resource or the external memory resource to one or more of the plurality of virtual functions (VF1-VF3) comprises:
searching (S210) for, based on an analysis result, a resource allocation map in a resource history storage;
based on the resource allocation map being found, allocating (S220), based on the resource allocation map, the internal memory resource or the external memory resource to one or more of the plurality of virtual functions (VF1-VF3); and
based on the resource allocation map not being found, generating (S230) the resource allocation map, based on the SLA information, the attribute information, state information of the internal memory resource, and state information of the external memory resource.

14. The method of any one of claims 8 to 13, wherein the allocating (S150), by the storage management system (1100), based on the SLA information and the attribute information, the internal memory resource or the external memory resource to one or more of the plurality of virtual functions (VF1-VF3) comprises:
obtaining a workload characteristic; and
allocating, based on the workload characteristic, the SLA information, and the attribute information, the internal memory resource or the external memory resource to one or more of the plurality of virtual functions (VF1-VF3).

15. The method of any one of claims 8 to 14, wherein the allocating, by the storage management system (1100), based on the SLA information and the attribute information, the internal memory resource or the external memory resource to one or more of the plurality of virtual functions (VF1-VF3) comprises:
generating, by a machine learning model, based on input data comprising the SLA information, the attribute information, and state information of the internal memory resource and the external memory resource, an optimal resource allocation map; and
allocating, based on the optimal resource allocation map, the internal memory resource or the external memory resource to one or more of the plurality of virtual functions (VF1-VF3).
